(19) 

**Europäisches Patentamt**
**European Patent Office**
**Office européen des brevets**

(11) **EP 4 697 816 A1**

(12) **EUROPEAN PATENT APPLICATION**
published in accordance with Art. 153(4) EPC

(43) Date of publication:
**18.02.2026 Bulletin 2026/08**

(21) Application number: **24807469.2**

(22) Date of filing: **10.05.2024**

(51) International Patent Classification (IPC):
**H04W 52/02** (2009.01)     **H04W 76/28** (2018.01)
**H04W 72/232** (2023.01)

(52) Cooperative Patent Classification (CPC):
**Y02D 30/70**

(86) International application number:
**PCT/KR2024/006370**

(87) International publication number:
**WO 2024/237596 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.05.2023 KR 20230061853**

(71) Applicant: Samsung Electronics Co., Ltd.
**Suwon-si, Gyeonggi-do 16677 (KR)**

(72) Inventors:
• **LEE, Jaewon**
**Suwon-si, Gyeonggi-do 16677 (KR)**
• **KIM, Younsun**
**Suwon-si, Gyeonggi-do 16677 (KR)**
• **YANG, Hyewon**
**Suwon-si, Gyeonggi-do 16677 (KR)**
• **CHOI, Seunghoon**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR DECREASING POWER CONSUMPTION OF TERMINAL HAVING WAKE-UP RECEIVER IN WIRELESS COMMUNICATION SYSTEM**

(57)     The present disclosure relates to a 5G or 6G communication system for supporting higher data transmission rates. In addition, the present disclosure relates to a method and device for decreasing power consumption of a terminal having a wake-up receiver in a mobile communication system. The method performed by a terminal according to an embodiment of the present disclosure comprises the steps of: receiving, through higher layer signaling, a configuration for a plurality of time periods for physical downlink control channel (PDCCH) monitoring skipping, and a configuration related to skipping for PDCCH monitoring through a main radio (MR) of the terminal; receiving downlink control information (DCI) comprising information related to a time period among the plurality of time periods; skipping PDCCH monitoring through the MR in the time period; and, if a wake-up signal (WUS) is received through a low power (LR) wake-up receiver of the terminal within the time period, performing PDCCH monitoring through the MR in at least some time period after the WUS is received in the time period.

FIG. 11

**Description**

**[Technical Field]**

The disclosure relates to a wireless communication system, and more particularly, to a method and device for reducing power consumption of a user equipment (UE) having a wake-up receiver.

**[Background Art]**

5th generation (5G) mobile communication technologies define broad frequency bands to enable high transmission rates and new services, and may be implemented not only in "Sub 6 GHz" bands, such as 3.5 gigahertz (GHz), but also in "Above 6 GHz" bands referred to as millimeter wave (mmWave) including 28 GHz and 39 GHz. In addition, it has been considered to implement 6th generation (6G) mobile communication technologies referred to as Beyond 5G systems in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to meet performance requirements for enhanced mobile broadband (eMBB), ultra-reliable/low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been ongoing physical layer standardization regarding technologies, such as vehicle-to-everything (V2X) for aiding driving determination by autonomous vehicles based on information on locations and states of vehicles transmitted by the vehicles and for enhancing user convenience, new radio unlicensed (NR-U) aimed at system operations conforming to various regulation-related requirements in unlicensed bands, NR user equipment (UE) power saving, a non-terrestrial network (NTN) that is UE-satellite direct communication for providing coverage in an area in which communication with terrestrial networks is unavailable, and positioning.

In addition, there has been ongoing standardization in air interface architecture/protocol field regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service field regarding a 5G baseline architecture (e.g., service based architecture or service based interface) for combining Network Functions Virtualization (NFV) and Software-Defined Networking (SDN) technologies, and Mobile Edge Computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR), and the like, 5G performance improvement and complexity reduction by utilizing artificial intelligence (AI) and machine learning (ML), AI service support, metaverse service support, and drone communication.

Also, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas, and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

As various services are providable with the development of mobile communication systems as described above, there is a need for a method to effectively provide the services.

**[Disclosure of Invention]**

**[Technical Problem]**

Based on the discussion described above, the disclosure may provide a method and device for reducing power consumption of a user equipment (UE) having a wake-up receiver in a wireless communication system.

Technical subjects to be achieved by the disclosure are not limited to those described above, and still other technical subjects not described herein may be considered by one of ordinary skill in the art from various embodiments of the disclosure described below.

**[Solution to Problem]**

A method performed by a user equipment (UE) in a communication system according to an embodiment of the disclosure includes receiving, through higher layer signaling, a configuration for a plurality of time periods for physical downlink control channel (PDCCH) monitoring skipping and a configuration related to skipping for PDCCH monitoring through a main radio (MR) of the UE; receiving downlink control information (DCI) including information related to a time period among the plurality of time periods; skipping PDCCH monitoring through the MR in the time period; and when a wake-up signal (WUS) is received through a low power (LR) wake-up receiver of the UE within the time period, performing PDCCH monitoring through the MR in at least some time periods after the WUS is received in the time period.

According to an embodiment of the disclosure, PDCCH monitoring through the MR is skipped for a plurality of PDCCH search space types, and the plurality of PDCCH search space types include a user equipment specific search space (USS) and a Type3-PDCCH common search space (CSS), and further includes at least one of a Type0-PDCCH CSS, a Type0A-PDCCH CSS, a Type0B-PDCCH CSS, a Type1A-PDCCH CSS, a Type2-PDCCH CSS, and a Type2A-PDCCH CSS.

According to an embodiment of the disclosure, PDCCH monitoring through the MR is performed for the plurality of PDCCH search space types after the WUS is received, or performed for a specific PDCCH search space type indicated by the WUS among the plurality of PDCCH search space types after the WUS is received.

According to an embodiment of the disclosure, when a discontinuous reception (DRX) configuration is received through the higher layer signaling and the WUS is received through the LR, whether drx-onDurationTimer included in the DRX configuration is triggered is indicated by the WUS, and the WUS is different from DCI format 2_6 for the MR.

According to an embodiment of the disclosure, when the WUS is configured to be monitored through the LR, the DCI format 2_6 is not monitored through the MR or the DCI format 2_6 received through the MR is ignored.

According to an embodiment of the disclosure, the method further includes transmitting UE capability report related to that the UE includes the LR.

A UE of a communication system according to an embodiment of the disclosure includes a transceiver; and a processor connected to the transceiver, wherein the processor is configured to receive, through higher layer signaling, a configuration for a plurality of time periods for physical downlink control channel (PDCCH) monitoring skipping and a configuration related to skipping for PDCCH monitoring through a main radio (MR) of the UE; to receive downlink control information (DCI) including information related to a time period among the plurality of time periods; to skip PDCCH monitoring through the MR in the time period; and to when a wake-up signal (WUS) is received through a low power (LR) wake-up receiver of the UE within the time period, perform PDCCH monitoring through the MR in at least some time periods after the WUS is received in the time period.

According to an embodiment of the disclosure, PDCCH monitoring through the MR is skipped for a plurality of PDCCH search space types, and the plurality of PDCCH search space types include a user equipment specific search space (USS) and a Type3-PDCCH common search space (CSS), and further includes at least one of a Type0-PDCCH CSS, a Type0A-PDCCH CSS, a Type0B-PDCCH CSS, a Type1A-PDCCH CSS, a Type2-PDCCH CSS, and a Type2A-PDCCH CSS.

According to an embodiment of the disclosure, PDCCH monitoring through the MR is performed for the plurality of PDCCH search space types after the WUS is received, or performed for a specific PDCCH search space type indicated by the WUS among the plurality of PDCCH search space types after the WUS is received.

According to an embodiment of the disclosure, when a discontinuous reception (DRX) configuration is received through the higher layer signaling and the WUS is received through the LR, whether drx-onDurationTimer included in the DRX configuration is triggered is indicated by the WUS, and the WUS is different from DCI format 2_6 for the MR.

According to an embodiment of the disclosure, when the WUS is configured to be monitored through the LR, the DCI format 2_6 is not monitored through the MR or the DCI format 2_6 received through the MR is ignored.

A method performed by a base station in a communication system according to an embodiment of the disclosure includes transmitting, through higher layer signaling, a configuration for a plurality of time periods for physical downlink control channel (PDCCH) monitoring skipping and a configuration related to skipping for PDCCH monitoring through a main radio (MR) of a UE to the UE; and transmitting downlink control information (DCI) including information related to a time period among the plurality of time periods to the UE, wherein transmission of a PDCCH for the MR to the UE is skipped in the time period, and when a wake-up signal (WUS) for a low power (LR) wake-up receiver of the UE is transmitted to the UE within the time period, transmission of the PDCCH for the MR to the UE is performed in at least some time periods after the WUS of the time period is transmitted.

According to an embodiment of the disclosure, when a discontinuous reception (DRX) configuration is received through the higher layer signaling and the WUS for the LR is transmitted, whether drx-onDurationTimer included in the DRX configuration is triggered is indicated by the WUS, and the WUS is different from DCI format 2_6 for the MR.

A base station of a communication system according to an embodiment of the disclosure includes a transceiver; and a processor connected to the transceiver, wherein the processor is configured to transmit, through higher layer signaling, a configuration for a plurality of time periods for physical downlink control channel (PDCCH) monitoring skipping and a configuration related to skipping for PDCCH monitoring through a main radio (MR) of a UE to the UE; and to transmit downlink control information (DCI) including information related to a time period among the plurality of time periods to the UE, and transmission of a PDCCH for the MR to the UE is skipped in the time period, and when a wake-up signal (WUS) for a low power (LR) wake-up receiver of the UE is transmitted to the UE within the time period, transmission of the PDCCH for the MR to the UE is performed in at least some time periods after the WUS of the time period is transmitted.

According to an embodiment of the disclosure, when a discontinuous reception (DRX) configuration is received through the higher layer signaling and the WUS for the LR is transmitted, whether drx-onDurationTimer included in the DRX configuration is triggered is indicated by the WUS, and the WUS is different from DCI format 2_6 for the MR.

The above-described embodiments of the disclosure are only a portion of desirable embodiments of the disclosure, and various embodiments that reflect technical features of the disclosure may be derived and understood by one of ordinary skill in the art based on the detailed description to be described below.

**[Advantageous Effects of Invention]**

According to an embodiment of the disclosure, it is possible to provide low power consumption to a user equipment (UE) by defining a signal transmission method of a base station in a wireless communication system.

According to an embodiment of the disclosure, excessive power consumption of a UE may be resolved.

The effects that may be acquired from an embodiment of the disclosure are not limited to the effects mentioned above, and still other effects not mentioned herein may be clearly derived and understood by one of ordinary skill in the art based on the detailed description below.

**[Brief Description of Drawings]**

FIG. 1 illustrates an example of a basic structure of a time-frequency resource area of a 5G system according to an embodiment of the disclosure.

FIG. 2 illustrates an example of a time domain mapping structure and a beam sweeping operation of a synchronization signal according to an embodiment of the disclosure.

FIG. 3 illustrates an example of a random access procedure according to an embodiment of the disclosure.

FIG. 4 illustrates an example of a procedure in which a user equipment (UE) reports UE capability information to a base station according to an embodiment of the disclosure.

FIG. 5 illustrates an example of a discontinuous reception (DRX) operation according to an embodiment of the disclosure.

FIG. 6 illustrates an example in which a base station instructs a UE having a wake-up receiver (WUR) to transition to a main radio state through a wake-up signal (WUS) according to an embodiment of the disclosure.

FIG. 7 illustrates an example of an operation in which an RRC_CONNECTED UE having a WUR dynamically activates DRX when a WUS is received regardless of the concept of a DRX cycle according to an embodiment of the disclosure.

FIG. 8 illustrates description related to downlink control information (DCI) format 2_6 indicating whether an existing UE needs to wake up for PDCCH monitoring in a next DRX cycle.

FIG. 9 illustrates an example of an operation for a UE procedure in which an RRC_CONNECTED UE having a WUR receives a WUS and is informed whether the UE needs to wake up in configured DRX according to an embodiment of the disclosure.

FIG. 10 illustrates a PDCCH skipping operation of an existing UE.

FIG. 11 illustrates an example of a PDCCH skipping operation of an RRC_CONNECTED UE having a WUR according to an embodiment of the disclosure.

FIG. 12 illustrates an example of an operation of a UE and a base station according to an embodiment of the disclosure.

FIG. 13 illustrates an example of a UE transmission and reception device in a wireless communication system according to an embodiment of the disclosure.

FIG. 14 is a block diagram illustrating an example of a constitution of a UE according to an embodiment of the disclosure.

FIG. 15 is a block diagram illustrating an example of a constitution of a base station according to an embodiment of the disclosure.

**[Mode for the Invention]**

Hereinafter, embodiments of the disclosure are described with reference to the accompanying drawings. When detailed description of a related known function or constitution is determined to unnecessarily obscure the gist of the disclosure in describing the disclosure, the detailed description will be omitted. Terms that are described below are terms defined in consideration of the functions in the disclosure, and may be different according to the intent of a user, an operator, or custom. Therefore, the definitions of the terms should be made based on the overall contents throughout the specification.

The advantages and features of the disclosure and methods to achieve them will be apparent with reference to embodiments as described below in detail in conjunction with the accompanying drawings. However, the disclosure is not limited to the embodiments set forth below, but may be implemented in various different forms. The following embodiments are provided only to completely disclose and inform those skilled in the art of the scope of the disclosure, and the appended claims. Throughout the specification, the same or like reference numerals refer to the same or like components.

Herein, it will be understood that each block of flowchart illustrations and combinations of blocks in the flowchart illustrations may be implemented by computer program instructions. These computer program instructions may be provided to a processor of a general-purpose computer, a special purpose computer, or other programmable data processing apparatus, such that the instructions, executed via the processor of the computer or other programmable data processing apparatus, create a method for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction implies that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions executed on the computer or other programmable apparatus provide steps for implementing the functions specified in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved.

Here, the term "unit" used herein refers to a software component or a hardware component, such as a field programmable gate array (FPGA) or an application specific integrated circuit (ASIC), and performs a predetermined function. However, the term "unit" does not always have a meaning limited to software or hardware. "Unit" may be configured either to be stored in an addressable storage medium or to execute one or more processors. Therefore, "unit" includes, for example, components such as software components, object-oriented software components, class components, and task components, processes, functions, properties, procedures, sub-routines, segments of a program code, drivers, firmware, micro-codes, circuits, data, database, data structures, tables, arrays, and parameters. The components and functions provided by the "unit" may be combined into a smaller number of components and "units", or further divided into additional components and "units". In addition, the components and "units" may be implemented to reproduce one or more CPUs within a device or a security multimedia card. Also, the term "unit" in the embodiments may include one or more processors.

When detailed description of a related known function or constitution is determined to unnecessarily obscure the gist of the disclosure in describing the disclosure below, the detailed description will be omitted. Hereinafter, embodiments of the disclosure are described with reference to the accompanying drawings.

Terms used herein to identify access nodes, terms indicating network entities, terms indicating messages, terms indicating interfaces between network entities, and terms indicating various identification information are examples for convenience of explanation. Therefore, the disclosure is not limited to the terms described below and other terms indicating objects having the equivalent technical meaning may be used.

In the following description, a physical channel and a signal may be interchangeably used with data or a control signal. For example, a physical downlink shared channel (PDSCH) is a term that indicates a physical channel through which data is transmitted, but the PDSCH may be used to indicate data. That is, herein, the expression 'transmit a physical channel' may be interpreted equivalently to the expression 'transmit data or a signal through a physical channel.'

Hereinafter, herein, higher signaling refers to a signal transmission method in which a base station transmits a signal to a UE using a downlink data channel of a physical layer or the UE transmits a signal to the base station using an uplink data channel of the physical layer. Higher signaling may be understood as radio resource control (RRC) signaling or a media access control (MAC) control element (CE).

Hereinafter, for convenience of explanation, the disclosure uses terms and names defined in the 3rd Generation Partnership Project (3GPP) new radio (5G mobile communication standard) standard. However, the disclosure is not limited to the terms and the names, and may be equally applied to systems that conform to other standards. Also, the term "UE" may represent not only a cellular phone, a smartphone, Internet of things (IoT) devices, and sensors but also other wireless communication devices.

Hereinafter, a base station refers to an entity that performs resource assignment of a UE and may be at least one of a gNode B, a gNB, an eNode B, an eNB, a Node B, a base station (BS), a wireless access unit, a base station controller, and a node on a network. The UE may include a user equipment (UE), a mobile station (MS), a cellular phone, a smartphone, a computer, and a multimedia system that may perform a communication function. Of course, the disclosure is not limited to the examples.

To handle the explosively increasing mobile data traffic, the initial standards of 5th Generation (5G) system or (NR) access technology (NR) after LTE (Long Term Evolution or Evolved Universal Terrestrial Radio Access (E-UTRA)) and LTE-A (LTE-Advanced or E-UTRA Evolution) have been completed. While the existing mobile communication systems have focused on existing voice/data communication, the 5G system aims to satisfy various services and requirements, such as enhanced mobile broadband (eMBB) services to improve existing voice/data communication, ultra-reliable and low latency communication (URLLC) services, and massive machine type communication (MTC) services to support mass machine-to-machine communication.

While the system transmission bandwidth of the existing LTE and LTE-A per carrier is limited to the maximum of 20 MHz, the 5G system aims to provide ultra-high-speed data services reaching several Gbps using much wider ultra-wide bandwidth. Therefore, the 5G system is considering the ultra-high frequency band ranging from several GHz in which it is relatively easy to secure an ultra-wide bandwidth frequency to the maximum of 100 GHz as candidate frequencies. Additionally, it is possible to secure wide bandwidth frequencies for the 5G system through frequency reassignment or assignment in the frequency band ranging from hundreds of MHz to several GHz used in the existing mobile communication system.

Radio waves of the ultra-high frequency band have wavelengths of several millimeters (mm) and are also called millimeter waves (mmWave). However, in the ultra-high frequency band, pathloss of radio waves increases in proportion to the frequency band, which leads to reducing coverage of a mobile communication system.

To overcome the drawback of the reduced coverage in the ultra-high frequency band, beamforming technology for increasing the range of radio waves by concentrating the radiated energy of radio waves to a predetermined target point using a plurality of antennas is applied. That is, a signal to which the beamforming technology is applied has a relatively narrow beam width, and radiation energy is concentrated within the narrow beam width, increasing the range of radio waves. The beamforming technology may be applied to each of a transmission end and a reception end. The beamforming technology also reduces interference in areas outside a beamforming direction, in addition to increasing the coverage. Accurate measurement and feedback methods of transmit/receive beams are required for the beamforming technology to properly operate. The beamforming technology may be applied to a control channel or a data channel that makes a one-to-one correspondence between a predetermined UE and a base station. Also, the beamforming technology may be applied for the coverage increase even to a common signal, for example, a synchronization signal, transmitted from the base station to a plurality of UEs within the system, a physical broadcast channel (PBCH), a control channel for transmitting system information, and a data channel. In the case of applying the beamforming technology to the common signal, beam sweeping technology for transmitting a signal by changing the beam direction may be additionally applied such that the common signal may reach a UE present at any location within a cell.

Another requirement of the 5G system is an ultra-low latency service with transmission delay between transmission and reception ends of about 1 ms. As one method to reduce the transmission delay, there is a need to design a short transmission time interval (TTI)-based frame structure compared to LTE and LTE-A. A TTI refers to a basic time unit for performing scheduling, and the TTI of the existing LTE and LTE-A systems is 1 ms corresponding to the length of a single subframe. For example, short TTIs to meet the requirements for ultra-low latency services of the 5G system may be 0.5 ms, 0.25 ms, and 0.125 ms that are shorter than the existing LTE and LTE-A systems.

According to an embodiment of the disclosure, since a signal transmission method of a UE having a wake-up receiver is defined in a mobile communication system, the excessive power consumption of the UE may be resolved and high energy efficiency may be achieved.

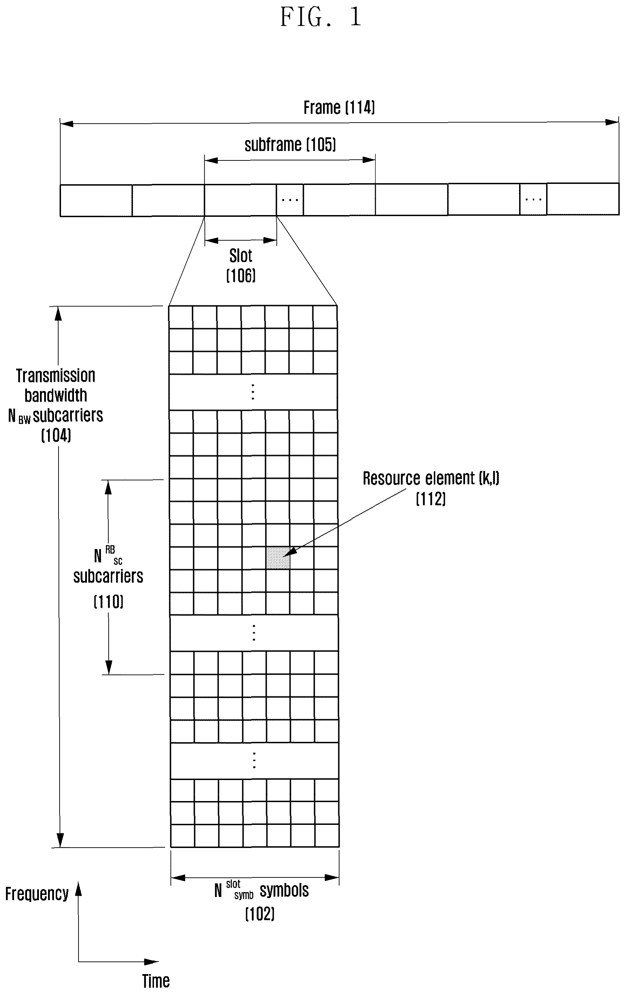

FIG. 1 illustrates an example of a basic structure of a time-frequency resource area of a 5G system according to an embodiment of the disclosure. That is, FIG. 1 illustrates the basic structure of the time-frequency resource area that is a wireless resource area in which data or a control channel of the 5G system is transmitted.

With reference to FIG. 1, in FIG. 1, the horizontal axis represents the time domain, and the vertical axis represents the frequency domain. The minimum transmission unit in the time domain of the 5G system is an orthogonal frequency division multiplexing (OFDM) symbol, $N^{slot}_{symb}$ symbols 102 may be gathered to constitute a single slot 106, and slots may be gathered to constitute a single subframe 105. The length of the subframe is 1.0 ms, and ten subframes may be gathered to constitute a 10ms frame 114. The minimum transmission unit in the frequency domain is a subcarrier, and the bandwidth of the entire system transmission bandwidth may include a total of $N_{BW}$ subcarriers 104.

A basic unit of resources in the time-frequency domain is a resource element (RE) 112 and may be represented by an OFDM symbol index and a subcarrier index. A resource block (RB) or a physical resource block (PRB may be defined as $N^{RB}_{SC}$ consecutive subcarriers 110 in the frequency domain. In the 5G system, $N^{RB}_{SC} = 12$, and a data rate may increase in proportion to the number of RBs scheduled to a UE.

In the 5G system, a base station may map data in RB units and may perform scheduling for RBs that typically constitute a single slot for a predetermined UE. That is, in the 5G system, a basic time unit for scheduling may be a slot and a basic frequency unit for scheduling may be an RB.

The number of OFDM symbols, $N^{slot}_{symb}$, is determined according to the length of a cyclic prefix (CP) added for each symbol to prevent interference between symbols. For example, if a normal CP is $N^{slot}_{symb} = 14$, and if an extended CP is applied, $N^{slot}_{symb} = 12$. The extended CP is applied to a system with a relatively long propagation transmission distance than the normal CP, enabling orthogonality between symbols. In the case of the normal CP, the ratio between the CP length and the symbol length is maintained at a constant value, the overhead caused by the CP may be maintained constant regardless of a subcarrier spacing. That is, if the subcarrier spacing is small, the symbol length may increase and accordingly, the CP length may also increase. On the contrary, if the subcarrier spacing is large, the symbol length may decrease and accordingly, the CP length may also decrease. The symbol length and the CP length may be inversely proportional to the subcarrier spacing.

In the 5G system, various frame structures may be supported by adjusting the subcarrier spacing to meet various services and requirements. For example,

- From the perspective of an operating frequency band, if the subcarrier spacing is large, it is advantageous for phase noise recovery in the high frequency band.
- From the perspective of a transmission time, if the subcarrier spacing is large, the symbol length in the time domain becomes short and consequently, the slot length becomes short, which is advantageous for supporting ultra-low latency services, such as URLLC.
- From the perspective of a cell size, the longer CP length allows supporting a large cell, so a relatively large cell may be supported according to the decrease in the subcarrier spacing. A cell is a concept that indicates an area covered by a single base station.

The subcarrier spacing (subcarrier spacing), the CP length, and the like are information essential for OFDM transmission and reception. When the base station and the UE recognize the subcarrier spacing, the CP length, and the like as common values, smooth transmission and reception is possible. [Table 1] shows the relationship between subcarrier spacing configuration ($\mu$), subcarrier spacing ($\Delta f$), and CP length supported in the 5G system.

[Table 1]

| $\mu$ | $\Delta f = 2^{\mu} \cdot 15[\text{kHz}]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

[Table 2] shows the number of slots per slot ( $N_{symb}^{slot}$ ), the number of slots per frame ( $N_{slot}^{frame,\mu}$ ), and the number of slots per subframe ( $N_{slot}^{subframe,\mu}$ ), for each subcarrier spacing configuration ($\mu$), in the case of the normal CP.

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 3] shows the number of symbols per slot ( $N_{symb}^{slot}$ ), the number of slots per frame ( $N_{slot}^{frame,\mu}$ ), and the number of slots per subframe ( $N_{slot}^{subframe,\mu}$ ) for each subcarrier spacing configuration ($\mu$), in the case of the extended CP.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the initial introduction phase of the 5G system, at least coexistence or dual mode operation with the existing LTE or/and LTE-A (hereinafter, referred to as LTE/LTE-A) systems is expected. Through this, the existing LTE/LTE-A may provide a stable system operation to the UE, and the 5G system may provide enhanced services to the UE. Therefore, the frame structure of the 5G system needs to include at least the frame structure of LTE/LTE-A or an essential parameter set (subcarrier spacing = 15 kHz).

For example, comparing a frame structure with subcarrier spacing configuration $\mu=0$ (hereinafter, referred to as frame structure A) and a frame structure with subcarrier spacing configuration $\mu=1$ (hereinafter, referred to as frame structure B), frame structure B shows that the subcarrier spacing and the RB size are twice as large, and the slot length and the symbol length are twice as small, compared to frame structure A. In the case of frame structure B, two slots may constitute a single subframe, and 20 subframes may constitute a single frame.

Generalizing the frame structure of the 5G system, high scalability is provided by allowing the essential parameter set, the subcarrier spacing, the CP length, and the slot length, to have the integer-multiple relationship for each frame structure. To indicate a reference time unit independent of the frame structure, a subframe with the fixed length of 1 ms may be defined.

The frame structure may be applied to correspond to various scenarios. From the perspective of the cell size, since a longer CP length may support a larger cell, frame structure A may support a relatively large cell compared to frame structure B. From the perspective of the operating frequency band, if the subcarrier spacing is larger, it is advantageous for phase noise recovery in the high frequency band, so frame structure B may support the relatively high operating frequency compared to frame structure A. From the perspective of services, a shorter slot length, which is a basic time unit of scheduling, is advantageous for supporting ultra-low latency services such as URLLC, so frame structure B may be relatively more suitable for URLLC services compared to frame structure A.

In the description of the disclosure below, uplink may represent a wireless link through which the UE transmits data or a control signal to the base station, and downlink may represent a wireless link through which the base station transmits data or a control signal to the UE.

In an initial access stage in which the UE initially accesses the system, the UE may synchronize downlink time and frequency from a synchronization signal transmitted from the base station through cell search, and may acquire a cell ID. The UE may receive a physical broadcast channel (PBCH) using the acquired cell ID, and may acquire a master information block (MIB), which is essential system information, from the PBCH. Additionally, the UE may receive system information (system information block (SIB)) transmitted from the base station, and may acquire cell-common transmission and reception-related control information. The cell-common transmission and reception-related control information may include random access-related control information, paging-related control information, and common control information on various types of physical channels.

A synchronization signal is a signal that serves as a reference for cell search, and the subcarrier spacing may be applied to be suitable for a channel environment, such as phase noise, for each frequency band. For a data channel or a control channel, the subcarrier spacing may be differently applied depending on a service type in order to support various services described above.

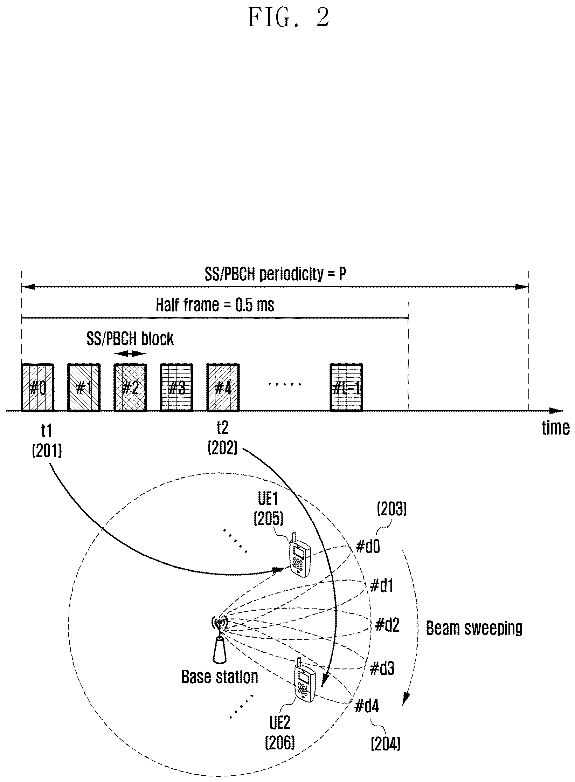

FIG. 2 illustrates an example of a time domain mapping structure and a beam sweeping operation of a synchronization signal according to an embodiment of the disclosure.

For the purpose of explanation, components may be defined as follows:

- Primary Synchronization Signal (PSS): The PSS is a signal that serves as reference for DL time/frequency synchronization, and provides some cell ID information.
- Secondary Synchronization Signal (SSS): The SSS serves as reference for DL time/frequency synchronization, and provides some remaining cell ID information. Additionally, the SSS may serve as a reference signal for demodulation of a PBCH.
- Physical Broadcast Channel (PBCH): The PBCH provides a master information block (MIB) that is essential system information required for transmission and reception of a data channel and a control channel of a UE. The essential system information may include search space-related control information indicating wireless resource mapping information of the control channel, scheduling control information on a separate data channel for transmitting system information, and information such as a system frame number (SFN) that is a frame unit index, which is a timing reference.
- Synchronization Signal (SS)/PBCH Block or SSB: The SS/PBCH block includes N OFDM symbols, and includes combination of the PSS, the SSS, and the PBCH. For a system to which beam sweeping technology is applied, the SS/PBCH block may be a minimum unit to which beam sweeping is applied. In the 5G system, N = 4. A base station may transmit up to L SS/PBCH blocks, and the L SS/PBCH blocks are mapped within a half frame (0.5 ms). The L SS/PBCH blocks are periodically repeated in units of predetermined periodicity P. The periodicity P may be notified to the UE from the base station through signaling. If separate signaling for the periodicity P is absent, the UE applies a pre-agreed default value.

With reference to FIG. 2, FIG. 2 shows an example in which beam sweeping is applied based on SS/PBCH block units over time. In the example of FIG. 2, UE1 205 receives an SS/PBCH block using a beam radiated in the direction of #d0 203 by beamforming applied to SS/PBCH block#0 at a time t1 201. UE2 206 receives an SS/PBCH block using a beam radiated in the direction of #d4 204 by beamforming applied to SS/PBCH block#4 at a time t2 202. The UE may acquire an optimal synchronization signal through a beam radiated from the base station in the direction in which the UE is present. For example, UE1 205 may have difficulty in acquiring time/frequency synchronization and essential system information from an SS/PBCH block through a beam radiated in the direction of #d4 that is away from a location of UE1.

In addition to an initial access procedure, the UE may receive an SS/PBCH block to determine whether radio link quality of a current cell is maintained at a certain level or more. Also, in a handover procedure in which the UE moves from the current cell to a neighboring cell, the UE may receive an SS/PBCH block of the neighboring cell to determine radio link quality of the neighboring cell and to acquire time/frequency synchronization of the neighboring cell.

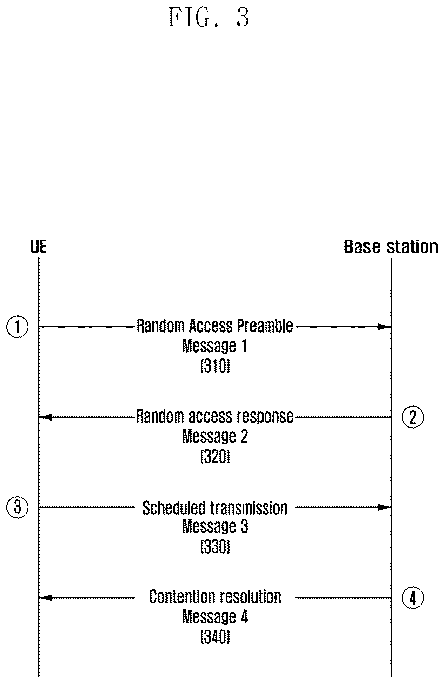

After the UE acquires an MIB and system information from the base station through the initial access procedure, the UE may perform a random access procedure to transition a link with the base station to a connected state or an RRC_CONNECTED state. Upon completion of the random access procedure, the UE transitions to the connected state and one-to-one communication between the base station and the UE is enabled. Hereinafter, the random access procedure is described in detail with reference to FIG. 3

FIG. 3 illustrates an example of a random access procedure according to an embodiment of the disclosure.

With reference to FIG. 3, in first operation 310 of the random access procedure, a UE may transmit a random access preamble to a base station. The random access preamble, which is an initial transmission message of the UE in the random access procedure, may be referred to as message 1. The base station may measure a transmission delay value between the UE and the base station from the random access preamble and may perform uplink synchronization. Here, the UE may arbitrarily select which random access preamble to use within a random access preamble given by system information in advance. The initial transmit power of the random access preamble may be determined based on pathloss between the base station and the UE that is measured by the UE. Also, the UE may determine a transmission beam direction of the random access preamble from a synchronization signal received from the base station and may transmit the random access preamble.

In second operation 320, the base station transmits an uplink transmission timing adjustment command to the UE based on a transmission delay value measured from the random access preamble received in first operation 310. Also, the base station may transmit an uplink resource and power control command to be used by the UE as scheduling information. The scheduling information may include control information on an uplink transmission beam of the UE.

If the UE does not receive a random access response (RAR) (or message 2), which is scheduling information on message 3, from the base station within a predetermined period of time in second operation 320, first operation 310 may be performed again. If first operation 310 is performed again, the UE may increase the random access preamble reception probability of the base station by increasing the transmit power of the random access preamble by a predetermined step and by transmitting the same (power ramping).

In third operation 330, the UE transmits uplink data (message 3) including its own UE ID to the base station through an uplink data channel (physical uplink shared channel (PUSCH)). A transmission timing of the uplink data channel for transmitting message 3 may follow a timing control command received from the base station in second operation 320. The transmit power of the uplink data channel for transmitting message 3 may be determined by considering a power control command received from the base station in second operation 320 and a power ramping value of the random access preamble. The uplink data channel for transmitting message 3 may refer to an initial uplink data signal transmitted from the UE to the base station after the UE transmits the random access preamble.

In fourth operation 340, if the base station determines that the UE performs random access without collision with another UE may transmit, to the UE, data (message 4) including an ID of the UE having transmitted uplink data in third operation 330. The UE may transmit, to the base station, hybrid automatic repeat request (HARQ)-ACK information indicating whether message 4 is successfully received through an uplink control channel (physical uplink control channel (PUCCH)).

If the base station fails in receiving a data signal from the UE due to collision between data transmitted from the UE in third operation 330 and data from another UE, the base station may not transmit any more data to the UE. If the UE does not receive data transmitted from the base station in fourth operation 340 within a predetermined period of time, the UE may determine that the random access procedure has failed and may restart from first operation 310.

If the random access procedure is successfully completed, the UE may transition to a connected state and one-to-one communication between the base station and the UE is enabled. The base station may receive a report on UE capability information from the UE in the connected state and may adjust scheduling with reference to the UE capability information of the UE. The UE may notify the base station of whether the UE supports a predetermined function and a maximum allowance value of a function supported by the UE through the UE capability information. Therefore, the UE capability information reported by each UE to the base station may be a different value for each UE.

For example, the UE may report UE capability information including at least a portion of the following control information to the base station as the UE capability information.

- Control information related to a frequency band supported by the UE
- Control information related to a channel bandwidth supported by the UE
- Control information related to a maximum modulation scheme supported by the UE
- Control information related to the maximum number of beams supported by the UE
- Control information related to the maximum number of layers supported by the UE
- Control information related to CSI reporting supported by the UE
- Control information regarding whether the UE supports frequency hopping

- Bandwidth-related control information when supporting carrier aggregation (CA)
- Control information regarding whether cross carrier scheduling is supported, when supporting carrier aggregation

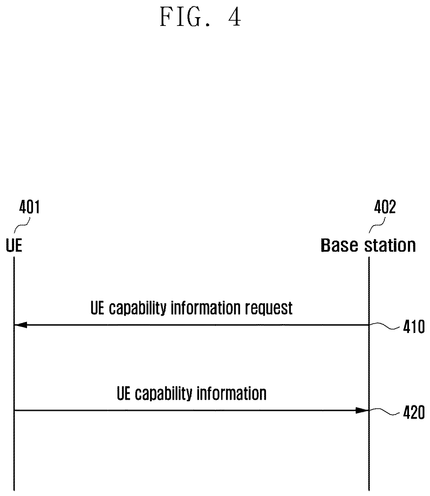

FIG. 4 illustrates an example of a procedure in which a UE reports UE capability information to a base station according to an embodiment of the disclosure.

With reference to FIG. 4, in operation 410, a base station 402 may transmit a UE capability information request message to a UE 401. Upon the UE capability information request from the base station, the UE transmits UE capability information to the base station in operation 420.

The UE connected to the base station through the above-described process may perform one-to-one communication as an RRC_CONNECTED UE. On the contrary, the UE that is not connected refers to an RRC_IDLE UE, and the operation of the RRC_IDLE UE may be classified as follows. Of course, the disclosure is not limited to the following example.

- Operating a UE-specific discontinuous reception (DRX) cycle configured by a higher layer
- Receiving a paging message from a core network
- Acquiring system information
- performing neighboring cell-related measurement and cell reselection

In the 5G system, a UE in a new state, RRC_INACTIVE, is defined to reduce energy and time consumed for an initial access of the UE. An RRC_INACTIVE UE may perform the following operation in addition to the operation performed by the RRC_IDLE UE. Of course, the disclosure is not limited to the following example.

- Storing access stratum (AS) information required for cell access
- Operating a UE-specific DRX cycle configured by an RRC layer
- Configuring a RAN-based notification area (RNA) that may be utilized for handover by an RRC layer, and periodically performing update
- Monitoring a RAN-based paging message transmitted through I-RNTI

Hereinafter, a scheduling method in which the base station transmits downlink data to the UE or instructs uplink data transmission of the UE is described.

Downlink control information (DCI) refers to control information transmitted from the base station to the UE through downlink, and may include downlink data scheduling information or uplink data scheduling information on a predetermined UE. In general, the base station may perform independent channel coding for DCI for each UE and then may transmit the DCI to each UE through a physical downlink control channel (PDCCH), which is a downlink physical control channel.

The base station may apply a predetermined DCI format to a UE to be scheduled, depending on the purpose, such as whether it is scheduling information on downlink data (downlink assignment), whether it is scheduling information on uplink data (uplink grant), or whether it is DCI for power control.

The base station may transmit downlink data to the UE through a physical downlink shared channel (PDSCH) that is a physical channel for downlink data transmission. Scheduling information, such as a specific mapping location of the PDSCH in the time and frequency domain, HARQ-related control information, and power control information, may be notified to the UE by the base station through DCI related to downlink data scheduling information among DCI transmitted through the PDCCH.

The UE may transmit uplink data to the base station through a physical uplink shared channel (PUSCH) that is a physical channel for uplink data transmission. Scheduling information, such as a specific mapping location of the PUSCH in the time and frequency domain, a modulation scheme, HARQ-related control information, and power control information, may be notified to the UE by the base station through DCI related to uplink data scheduling information DCI transmitted through the PDCCH.

Time-frequency resources to which the PDCCH is mapped are called a control resource set (CORESET). The CORESET may be configured for all or some frequency resources of the bandwidth supported by the UE in the frequency domain, and may be configured for one or a plurality of OFDM symbols in the time domain, which may be defined as control resource set duration (CORESET duration). The base station may configure one or a plurality of CORESETs to the UE through higher layer signaling (e.g., system information, master information block (MIB), radio resource control (RRC) signaling). Configuring a CORESET to the UE may indicate providing information such as CORESET identity, a frequency location of the CORESET, and the symbol length of the CORESET. Information provided from the base station to the UE to configure the CORESET may include at least a portion of information included in <Table 4>.

[Table 4]

```
ControlResourceSet ::=          SEQUENCE {
    controlResourceSetId          ControlResourceSetId,
    (CORESET identifier)
    frequencyDomainResources      BIT STRING (SIZE (45)),
    (frequency domain resources)
    duration                      INTEGER (1..maxCoReSetDuration),
    (CORESET duration)
    cce-REG-MappingType           CHOICE {
    (CCE-to-REG mapping type)
        interleaved                   SEQUENCE {
            reg-BundleSize            ENUMERATED {n2, n3, n6},
            (REG bundle szie)
            interleaverSize       ENUMERATED {n2, n3, n6},
            (interleaver size)
            shiftIndex               INTEGER(0..maxNrofPhysicalResourceBlocks-
1)       OPTIONAL -- Need S
            (interleaver shift)
        },
        nonInterleaved                NULL
    },
    precoderGranularity           ENUMERATED {sameAsREG-bundle,
allContiguousRBs},
    (precoding granularity)
    tci-StatesPDCCH-ToAddList     SEQUENCE(SIZE (1..maxNrofTCI-
StatesPDCCH)) OF TCI-StateId OPTIONAL, -- Cond NotSIB1-initialBWP
    (QCL configuration information)
    tci-StatesPDCCH-ToReleaseList  SEQUENCE(SIZE (1..maxNrofTCI-
StatesPDCCH)) OF TCI-StateId OPTIONAL, -- Cond NotSIB1-initialBWP
    (QCL configuration information)
    tci-PresentInDCI              ENUMERATED {enabled}
OPTIONAL, -- Need S

    (QCL indicator configuration information in DCI)
    pdcch-DMRS-ScramblingID          INTEGER (0..65535)
OPTIONAL, -- Need S
    (PDCCH DMRS scrambling identifier)


}
```

The CORESET may include $N_{RB}^{CORESET}$ RBs in the frequency domain and may include $N_{symb}^{CORESET} \in \{1,2,3\}$ symbols in the time domain. An NR PDCCH may include one or a plurality of control channel elements (CCEs). A single CCE may include six resource element groups (REGs), and a REG may be defined as one RB during one OFDM symbol. Within a single CORESET, REGs may be indexed in time-first order, starting with REG index 0 from the first OFDM symbol of the CORESET, the lowest RB.

An interleaved method and a non-interleaved method may be supported as transmission methods for the PDCCH. The base station may configure whether it is interleaved transmission or non-interleaved transmission for each CORESET to the UE through higher layer signaling. Interleaving may be performed on a REG bundle basis. A REG bundle may be defined as a set of one or a plurality of REGs. The UE may determine a CCE-to-REG mapping method in a corresponding CORESET based on whether interleaved transmission or non-interleaved transmission is configured by the base station, in a manner as shown in <Table 5> below.

[Table 5]

| |
|---|
| The CCE-to-REG mapping for a control-resource set can be interleaved or non-interleaved and is described by REG bundles: |
|     - REG bundle *i* is defined as REGs {*iL,iL*+1,...,*iL+L*-1} where L is the REG bundle size, $i = 0,1,\dots,N_{REG}^{CORESET}/L - 1$ , and $N_{REG}^{CORESET} = N_{RB}^{CORESET} N_{symb}^{CORESET}$ is the number of REGs in the CORESET |
|     - CCE *j* consists of REG bundles {*f(6/L),f(6j/L+1),...,f(6j/L+6/L-1)*} where *f(·)* is an interleaver<br>For non-interleaved CCE-to-REG mapping, L = 6 and *f(x) = x.* |
| For interleaved CCE-to-REG mapping, L $\in$ {2,6} for $N_{symb}^{CORESET} = 1$ and $L \in \{N_{symb}^{CORESET}, 6\}$ for $N_{symb}^{CORESET} \in \{2,3\}$. The interleaver is defined by<br><br>$$f(x) = (rC + c + n_{shift}) \bmod (N_{REG}^{CORESET}/L)$$<br>$$x = cR + r$$<br>$$r = 0,1,\dots,R-1$$<br>$$c = 0,1,\dots,C-1$$<br>$$C = N_{REG}^{CORESET}/(LR)$$<br><br>where $R \in \{2,3,6\}$ . |

The base station may notify the UE of configuration information, such as to which symbol the PDCCH is mapped within a slot and transmission periodicity, through signaling.

A search space of the PDCCH is described as follows. The number of CCEs required to transmit the PDCCH may be 1, 2, 4, 8, or 16 depending on an aggregation level (AL), and different numbers of CCEs may be used for link adaptation of a downlink control channel. For example, when AL=L, one downlink control channel may be transmitted through L CCEs. The UE performs blind decoding of detecting a signal without knowing information on the downlink control channel. To this end, a search space representing a set of CCEs may be defined. The search space is a set of downlink control channel candidates including CCEs that the UE needs to attempt to decode at a given aggregation level. Since there are a plurality of aggregation levels for generating a single bundle using 1, 2, 4, 8, and 16 CCEs, the UE may have a plurality of search spaces. A search space set may be defined as a set of search spaces at all configured aggregation levels.

The search space may be classified into a common search space (CSS) and a UE-specific search space (USS). For UEs of a group or all UEs to receive cell-common control information, such as a paging message or dynamic scheduling or for system information (SIB), the common search space of the PDCCH may be examined. For example, the UE may receive scheduling assignment information of the PDSCH for receiving system information by examining the common search space of the PDCCH. In the case of the common search space, since UEs of a certain group or all UEs need to receive the PDCCH, it may be defined as a set of pre-arranged CCEs. Scheduling assignment information on the UE-specific PDSCH or PUSCH may be received by examining, by the UE, the UE-specific search space of the PDCCH.

The UE-specific search space may be UE-specifically defined using a function of various system parameters and the UE's identity (ID).

The base station may configure configuration information on the search space of the PDCCH to the UE through higher layer signaling (e.g., SIB, MIB, RRC signaling). For example, the base station may configure, to the UE, the number of PDCCH candidates at each aggregation level L, a monitoring cycle for the search space, monitoring occasion of a symbol unit within a slot for the search space, a search space type (common search space or UE-specific search space), combination of a radio network temporary identifier (RNTI) and a DCI format to be monitored in the search space, and a CORESET index to monitor the search space. For example, parameters for the search space for the PDCCH may include information as shown in <Table 6> below.

[Table 6]

```
SearchSpace ::=                         SEQUENCE {
    searchSpaceId                       SearchSpaceId,
    (search space identifier)
    controlResourceSetId                ControlResourceSetId
OPTIONAL,     -- Cond SetupOnly
    (CORESET identifier)
    monitoringSlotPeriodicityAndOffset CHOICE {
    (monitoring slot level periodicity and offset)
        sl1                             NULL,
        sl2                             INTEGER (0..1),
        sl4                             INTEGER (0..3),
        sl5                             INTEGER (0..4),
        sl8                             INTEGER (0..7),
        sl10                            INTEGER (0..9),
        sl16                            INTEGER (0..15),
        sl20                            INTEGER (0..19),
        sl40                            INTEGER (0..39),
        sl80                            INTEGER (0..79),
        sl160                           INTEGER (0..159),
        sl320                           INTEGER (0..319),
        sl640                           INTEGER (0..639),
        sl1280                          INTEGER (0..1279),
        sl2560                          INTEGER (0..2559)
    }
OPTIONAL,     -- Cond Setup
    duration                            INTEGER (2..2559)
OPTIONAL,     -- Need R
    (monitoring duration)
    monitoringSymbolsWithinSlot         BIT STRING (SIZE (14))
OPTIONAL,     -- Cond Setup
    (monitoring symbol location in slot)
```

```
        nrofCandidates                    SEQUENCE {
    (number of PDCCH candidate per aggregation level)
            aggregationLevel1             ENUMERATED {n0, n1, n2, n3,
n4, n5, n6, n8},
            aggregationLevel2             ENUMERATED {n0, n1, n2, n3,
n4, n5, n6, n8},
            aggregationLevel4             ENUMERATED {n0, n1, n2, n3,
n4, n5, n6, n8},
            aggregationLevel8             ENUMERATED {n0, n1, n2, n3,
n4, n5, n6, n8},
            aggregationLevel16            ENUMERATED {n0, n1, n2, n3,
n4, n5, n6, n8}
        }
OPTIONAL,    -- Cond Setup
    searchSpaceType                   CHOICE {
    (search space type)
        common                        SEQUENCE {
        (common search space)
            dci-Format0-0-AndFormat1-0    SEQUENCE {
                ...
            }
OPTIONAL,    -- Need R
            dci-Format2-0                 SEQUENCE {
                nrofCandidates-SFI            SEQUENCE {
                    aggregationLevel1            ENUMERATED {n1,
n2}      OPTIONAL,    -- Need R
                    aggregationLevel2            ENUMERATED {n1,
n2}      OPTIONAL,    -- Need R
                    aggregationLevel4            ENUMERATED {n1,
n2}      OPTIONAL,    -- Need R
                    aggregationLevel8            ENUMERATED {n1,
n2}      OPTIONAL,    -- Need R
```

```
                    aggregationLevel16                    ENUMERATED {n1,
n2}      OPTIONAL      -- Need R
                        },
                        ...
                    }
OPTIONAL,     -- Need R
                dci-Format2-1                    SEQUENCE {
                    ...
                }
OPTIONAL,     -- Need R
                dci-Format2-2                    SEQUENCE {
                    ...
                }
OPTIONAL,     -- Need R
                dci-Format2-3                    SEQUENCE {
                    dummy1                            ENUMERATED {sl1,
sl2, sl4, sl5, sl8, sl10, sl16, sl20}   OPTIONAL,     -- Cond Setup
                    dummy2                            ENUMERATED {n1,
n2},
                    ...
                }
OPTIONAL      -- Need R
                },
                ue-Specific                    SEQUENCE {
                (UE-specific search space)
                    dci-Formats                    ENUMERATED
{formats0-0-And-1-0, formats0-1-And-1-1},
                    ...,

                }
            }
OPTIONAL      -- Cond Setup2
}
```

The base station may configure one or a plurality of search space sets to the UE based on configuration information. According to an embodiment of the disclosure, the base station may configure search space set 1 and search space set 2 to the UE. In search space set 1, the UE may be configured to monitor X-RNTI-scrambled DCI format A in the common search space. In search space set 2, the UE may be configured to monitor Y-RNTI-scrambled DCI format B in the UE-specific search space.

According to configuration information, one or a plurality of search space sets may be present in the common search space or the UE-specific search space. For example, search space set#1 and search space set#2 may be configured as common search spaces, and search space set#3 and search space set#4 may be configured as UE-specific search spaces.

In the common search space, the UE may monitor the following combinations of DCI formats and RNTIs. Of course, the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the UE may monitor the following combinations of DCI formats and RNTIs. Of course, the disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The above-described RNTIs may follow the following definitions and uses.

- C-RNTI (Cell RNTI): For UE-specific PDSCH or PUSCH scheduling
- TC-RNTI (Temporary Cell RNTI): For UE-specific PDSCH scheduling
- CS-RNTI (Configured Scheduling RNTI): For semi-statically configured UE-specific PDSCH scheduling
- RA-RNTI (Random Access RNTI): For PDSCH scheduling in a random access stage
- P-RNTI (Paging RNTI): For scheduling PDSCH through which paging is transmitted
- SI-RNTI (System Information RNTI): For scheduling PDSCH through which system information is transmitted
- INT-RNTI (Interruption RNTI): To indicate whether puncturing is performed on PDSCH
- TPC-PUSCH-RNTI (Transmit Power Control for PUSCH RNTI): To indicate a power control command for PUSCH
- TPC-PUCCH-RNTI (Transmit Power Control for PUCCH RNTI): To indicate a power control command for PUCCH
- TPC-SRS-RNTI (Transmit Power Control for SRS RNTI): To indicate a power control command for SRS

The above-described DCI formats may follow the definitions as shown in <Table 7> below.

[Table 7]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2 4 | Notifying the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying paging early indication and TRS availability indication for one or more UEs. |
| 3_0 | Scheduling of NR sidelink in one cell |
| 3_1 | Scheduling of LTE sidelink in one cell |

(continued)

| DCI format | Usage |
| --- | --- |
| 4_0 | Scheduling of PDSCH with CRC scrambled by MCCH-RNTI/G-RNTI for broadcast |
| 41 | Schedulng of PDSCH with CRC scrambled by G-RNTI/GCS-RNTI for multicast |
| 4_2 | Schedulng of PDSCH with CRC scrambled by G-RNTI/GCS-RNTI for multicast |

The search space of aggregation level L with CORESET p and search space set s may be expressed as the following equation.

[Equation 1]

$$ L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i $$

- $L$ : Aggregation level

- $n_{CI}$: Carrier index

- $N_{CCE,p}$: Total number of CCEs present within control area p

- $n_{s,f}^{\mu}$ : Slot index

- $M_{s,max}^{(L)}$ : Number of PDCCH candidates of aggregation level L

- $m_{s,n_{CI}} = 0, \ldots, M_{s,max}^{(L)} -1$ : PDCCH candidate index of aggregation level L

- $i = 0, ..., L -1$

- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0, A_p = 39827$ *for p mod 3* $= 0$ $A_p = 39829$ *for p mod 3* $= 1$ $A_p = 39839$ *for p mod 3* $= 2$ , D = 65537

- $n_{RNTI}$ : UE identity

$Y_{p,n_{s,f}^{\mu}}$ value may correspond to 0 in the case of the common search space. $Y_{p,n_{s,f}^{\mu}}$ value may correspond to a value that varies depending on the UE's ID (C-RNTI or ID configured to the UE by the base station) and time index in the case of the UE-specific search space.

Hereinafter, downlink control information (DCI) in the 5G system is described in detail.

In the 5G system, scheduling information on uplink data (or physical uplink data channel (physical uplink shared channel (PUSCH)) or downlink data (or physical downlink data channel (physical downlink shared channel (PDSCH)) may be transmitted from the base station to the UE through DCI. The UE may monitor a DCI format for fallback and a DCI format for non-fallback for the PUSCH or the PDSCH. The fallback DCI format may include a field predefined between the base station and the UE, and the non-fallback DCI format may include a configurable field.

DCI may be transmitted through a physical downlink control channel (PDCCH), which is a physical downlink control channel, through a channel coding and modulation process. A cyclic redundancy check (CRC) may be attached to a DCI message payload, and may be scrambled by a radio network temporary identifier (RNTI) corresponding to the identity of the UE. Different RNTIs may be used depending on the purpose of a DCI message, for example, UE-specific data transmission, a power control command, or a random access response. That is, the RNTI is not explicitly transmitted and included in a CRC calculation process and thereby transmitted. If the DCI message transmitted on the PDCCH is received, the UE may identify the CRC using the assigned RNTI. If the CRC identification result is correct, the UE may know that the message is transmitted to the UE.

For example, DCI that schedules the PDSCH for system information (SI) may be scrambled by SI-RNTI. DCI that schedules the PDSCH for a random access response (RAR) message may be scrambled by RA-RNTI. DCI that schedules the PDSCH for a paging message may be scrambled by P-RNTI. DCI that notifies a slot format indicator (SFI) may be scrambled by SFI-RNTI. DCI that notifies transmit power control (TPC) may be scrambled by TPC-RNTI. DCI that schedules the UE-specific PDSCH or PUSCH may be scrambled by a cell RNTI (C-RNTI).

DCI format 0_0 may be used as fallback DCI that schedules the PUSCH. Here, the CRC may be scrambled by C-RNTI. DCI format 0_0 with the CRC scrambled by C-RNTI may include the following information, for example, as shown in Table 8.

[Table 8]

| |
|---|
| - Identifier for DCI formats (DCI format identifier) - 1 bit |
|     - The value of this bit field is always set to 0, indicating an UL DCI format |
| - Frequency domain resource assignment (Frequency domain resource assignment) - $\left\lceil \log_2(N_{\mathrm{RB}}^{\mathrm{UL,BWP}}(N_{\mathrm{RB}}^{\mathrm{UL,BWP}}+1)/2) \right\rceil$ bits where $N_{\mathrm{RB}}^{\mathrm{UL,BWP}}$ is defined in subclause 7.3.1.0 |
|     - For PUSCH hopping with resource allocation type 1: |
|         - $N_{\mathrm{UL\_hop}}$ MSB bits are used to indicate the frequency offset according to Subclause 6.3 of [6, TS 38.214], where $N_{\mathrm{UL\_hop}}$ =1 if the higher layer parameter *frequencyHoppingOffsetLists* contains two offset values and $N_{\mathrm{UL,hop}}$ = 2 if the higher layer parameter *frequencyHoppingOffsetLists* contains four offset values |
|         - $\left\lceil \log_2(N_{\mathrm{RB}}^{\mathrm{UL,BWP}}(N_{\mathrm{RB}}^{\mathrm{UL,BWP}}+1)/2) \right\rceil - N_{\mathrm{UL\_hop}}$ bits provides the frequency domain resource allocation according to Subclause 6.1.2.2.2 of [6, TS 38.214] |
|     - For non-PUSCH hopping with resource allocation type 1: |
|         - $\left\lceil \log_2(N_{\mathrm{RB}}^{\mathrm{UL,BWP}}(N_{\mathrm{RB}}^{\mathrm{UL,BWP}}+1)/2) \right\rceil$ bits provides the frequency domain resource allocation according to Subclause 6.1.2.2.2 of [6, TS 38.214] |
| - Time domain resource assignment (Time domain resource assignment)- 4 bits as defined in Subclause 6.1.2.1 of [6, TS 38.214] |
| - Frequency hopping flag (frequency hopping flag) - 1 bit according to Table 7.3.1.1.1-3, as defined in Subclause 6.3 of [6, TS 38.214] |
| - Modulation and coding scheme (Modulation and coding scheme) - 5 bits as defined in Subclause 6.1.4.1 of [6, TS 38.214] |
| - New data indicator (New data indicator) - 1 bit |
| - Redundancy version (Redundancy version) - 2 bits as defined in Table 7.3.1.1.1-2 |
| - HARQ process number (HARQ process number) - 4 bits |
| - TPC command for scheduled PUSCH (Transmit Power Control command for scheduled PUSCH) - 2 bits as defined in Subclause 7.1.1 of [5, TS 38.213] |
| - Padding bits, if required. |
| - UL/SUL indicator (uplink (UL)/ supplementary UL (SUL) indicator) - 1 bit for UEs configured with *supplementaryUplink* in *ServingCellConfig* in the cell as defined in Table 7.3.1.1.1-1 and the number of bits for DCI format 1_0 before padding is larger than the number of bits for DCI format 0_0 before padding; 0 bit otherwise. The UL/SUL indicator, if present, locates in the last bit position of DCI format 0_0, after the padding bit(s). |
|     - If the UL/SUL indicator is present in DCI format 0_0 and the higher layer parameter *pusch-Config* is not configured on both UL and SUL the UE ignores the UL/SUL indicator field in DCI format 0_0, and the corresponding PUSCH scheduled by the DCI format 0_0 is for the UL or SUL for which high layer parameter *pucch-Config* is configured; |
|     - If the UL/SUL indicator is not present in DCI format 0_0 and *pucch-Config* is configured, the corresponding PUSCH scheduled by the DCI format 0_0 is for the UL or SUL for which high layer parameter *pucch-Config* is configured. |

(continued)

| |
|---|
| - If the UL/SUL indicator is not present in DCI format 0_0 and *pucch-Config* is not configured, the corresponding PUSCH scheduled by the DCI format 0_0 is for the uplink on which the latest PRACH is transmitted. |

DCI format 0_1 may be used as non-fallback DCI that schedules the PUSCH. Here, the CRC may be scrambled by C-RNTI. DCI format 0_1 with CRC scrambled by C-RNTI may include the following information, for example, as shown in Table 9.

[Table 9]

- Identifier for DCI formats (DCI format identifier) - 1 bit
    - The value of this bit field is always set to 0, indicating an UL DCI format
- Carrier indicator (Carrier indicator) - 0 or 3 bits, as defined in Subclause 10.1 of [5, TS38.213].
- UL/SUL indicator (uplink (UL)/ supplementary UL (SUL) indicator) - 0 bit for UEs not configured with *supplementaryUplink* in *ServingCellConfig* in the cell or UEs configured with *supplementaryUplink* in *ServingCellConfig* in the cell but only PUCCH carrier in the cell is configured for PUSCH transmission; otherwise, 1 bit as defined in Table 7.3.1.1.1-1.
- Bandwidth part indicator (Bandwidth part indicator) - 0, 1 or 2 bits as determined by the number of UL BWPs $n_{BWP,RRC}$ configured by higher layers, excluding the initial UL bandwidth part. The bitwidth for this field is determined as $\lceil \log_2(n_{BWP}) \rceil$ bits, where

    - $n_{BWP} = n_{BWP,RRC} +1$ if $n_{BWP,RRC} \leq 3$, in which case the bandwidth part indicator is equivalent to the ascending order of the higher layer parameter *BWP-Id;*

    - otherwise $n_{BWP} = n_{BWP,RRC}$, in which case the bandwidth part indicator is defined in Table 7.3.1.1.2-1;
    If a UE does not support active BWP change via DCI, the UE ignores this bit field.
- Frequency domain resource assignment (Frequency domain resource assignment) - number of bits determined by the following, where $N_{RB}^{UL,BWP}$ is the size of the active UL bandwidth part:

    - $N_{RBG}$ bits if only resource allocation type 0 is configured, where $N_{RBG}$ is defined in Subclause 6.1.2.2.1 of [6, TS 38.214],

    - $\lceil \log_2(N_{RB}^{UL,BWP}(N_{RB}^{UL,BWP}+1)/2) \rceil$ bits if only resource allocation type 1 is configured, or

$\left( \lceil \log_2(N_{RB}^{UL,BWP}(N_{RB}^{UL,BWP}+1)/2) \rceil , N_{RBG} \right)+1$ bits if both resource allocation type 0 and 1 are configured.

    - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.

    - For resource allocation type 0, the $N_{RBG}$ LSBs provide the resource allocation as defined in Subclause 6.1.2.2.1 of [6, TS 38.214].

    - For resource allocation type 1, the $\lceil \log_2(N_{RB}^{UL,BWP}(N_{RB}^{UL,BWP}+1)/2) \rceil$ LSBs provide the resource allocation as follows:

        - For PUSCH hopping with resource allocation type 1:

            - $N_{UL\_hop}$ MSB bits are used to indicate the frequency offset according to Subclause 6.3 of [6, TS 38.214], where $N_{UL\_hop}=1$ if the higher layer parameter *frequencyHoppingOffsetLists* contains two offset values and $N_{UL\_hop} = 2$ if the higher layer parameter *frequencyHoppingOffsetLists* contains four offset values

            - $\lceil \log_2(N_{RB}^{UL,BWP}(N_{RB}^{UL,BWP}+1)/2) \rceil - N_{UL\_hop}$ bits provides the frequency domain resource allocation according to Subclause 6.1.2.2.2 of [6, TS 38.214]

        - For non-PUSCH hopping with resource allocation type 1:

            - $\lceil \log_2(N_{RB}^{UL,BWP}(N_{RB}^{UL,BWP}+1)/2) \rceil$ bits provides the frequency domain resource allocation according to Subclause 6.1.2.2.2 of [6, TS 38.214]

    If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.

- Time domain resource assignment (Time domain resource assignment) - 0, 1, 2, 3, or 4 bits as defined in Subclause 6.1.2.1 of [6, TS38.214]. The bitwidth for this field is determined as $\lceil \log_2(I) \rceil$ bits, where $I$ is the number of entries in the higher layer parameter *pusch-TimeDomainAllocationList* if the higher layer parameter is configured; otherwise $I$ is the number of entries in the default table.

- Frequency hopping flag (Frequency hopping flag) - 0 or 1 bit:

    - 0 bit if only resource allocation type 0 is configured or if the higher layer parameter *frequencyHopping* is not configured;

    - 1 bit according to Table 7.3.1.1.1-3 otherwise, only applicable to resource allocation type 1, as defined in Subclause 6.3 of [6, TS 38.214].

- Modulation and coding scheme (변조 및 코딩 스킴)- 5 bits as defined in Subclause 6.1.4.1 of [6, TS 38.214]

- New data indicator (New data indicator) - 1 bit

- Redundancy version (Redundancy version) - 2 bits as defined in Table 7.3.1.1.1-2

- HARQ process number (HARQ process number) - 4 bits

- 1st downlink assignment index (1st downlink assignment index) - 1 or 2 bits:

    - 1 bit for semi-static HARQ-ACK codebook;

    - 2 bits for dynamic HARQ-ACK codebook.

- 2nd downlink assignment index (2nd downlink assignment index) - 0 or 2 bits:

    - 2 bits for dynamic HARQ-ACK codebook with two HARQ-ACK sub-codebooks;

    - 0 bit otherwise.

- TPC command for scheduled PUSCH (Transmit Power Control command for scheduled PUSCH) - 2 bits as defined in Subclause 7.1.1 of [5, TS38.213]

- SRS resource indicator (SRS (sounding reference signal) resource indicator) - $\left\lceil \log_2\left( \sum_{k=1}^{\min\{L_{max}, N_{SRS}\}} \binom{N_{SRS}}{k} \right) \right\rceil$ or

$\lceil \log_2(N_{SRS}) \rceil$ bits, where $N_{SRS}$ is the number of configured SRS resources in the SRS resource set associated with the higher layer parameter *usage* of value *'codeBook'* or *'nonCodeBook',*

    SRS - $\left\lceil \log_2\left( \sum_{k=1}^{\min\{L_{max}, N_{SRS}\}} \binom{N_{SRS}}{k} \right) \right\rceil$ bits according to Tables 7.3.1.1.2-28/29/30/31 if the higher layer parameter *txConfig = nonCodebook,* where $N_{SRS}$ is the number of configured SRS resources in the SRS resource set associated with the higher layer parameter *usage* of value *'nonCodeBook'* and

      - if UE supports operation with *maxMIMO-Layers* and the higher layer parameter *maxMIMO-Layers* of *PUSCH-ServingCellConfig* of the serving cell is configured, $L_{max}$ is given by that parameter

      - otherwise, $L_{max}$ is given by the maximum number of layers for PUSCH supported by the UE for the serving cell for non-codebook based operation.

        - $\lceil \log_2(N_{SRS}) \rceil$ bits according to Tables 7.3.1.1.2-32 if the higher layer parameter *txConfig = codebook,* where $N_{SRS}$ is the number of configured SRS resources in the SRS resource set associated with the higher layer parameter *usage* of value *'codeBook'.*

- Precoding information and number of layers (Precoding information and number of layers) - number of bits determined by the following:

      - 0 bits if the higher layer parameter *txConfig = nonCodeBook;*

      - 0 bits for 1 antenna port and if the higher layer parameter *txConfig = codebook;*

      - 4, 5, or 6 bits according to Table 7.3.1.1.2-2 for 4 antenna ports, if *txConfig = codebook,* and according to whether transform precoder is enabled or disabled, and the values of higher layer parameters *maxRank,* and *codebookSubset;*

      - 2, 4, or 5 bits according to Table 7.3.1.1.2-3 for 4 antenna ports, if *txConfig = codebook,* and according to whether transform precoder is enabled or disabled, and the values of higher layer parameters *maxRank,* and *codebookSubset;*

      - 2 or 4 bits according to Table7.3.1.1.2-4 for 2 antenna ports, if *txConfig = codebook,* and according to whether transform precoder is enabled or disabled, and the values of higher layer parameters *maxRank* and *codebookSubset;*

(continued)

| |
|---|
| - 1 or 3 bits according to Table7.3.1.1.2-5 for 2 antenna ports, if *txConfig = codebook,* and according to whether transform precoder is enabled or disabled, and the values of higher layer parameters *maxRank* and *codebookSubset.*<br>- Antenna ports (Antenna ports) - number of bits determined by the following<br>    - 2 bits as defined by Tables 7.3.1.1.2-6, if transform precoder is enabled, *dmrs-Type*=1*, and max-Length*=1;<br>    - 4 bits as defined by Tables 7.3.1.1.2-7, if transform precoder is enabled, *dmrs-Type*=1*, and max-Length*=2;<br>    - 3 bits as defined by Tables 7.3.1.1.2-8/9/10/11, if transform precoder is disabled, *dmrs-Type*=1*,* and *maxLength*=1*,* and the value of rank is determined according to the SRS resource indicator field if the higher layer parameter *txConfig = nonCodebook* and according to the Precoding information and number of layers field if the higher layer parameter *txConfig = codebook;*<br>    - 4 bits as defined by Tables 7.3.1.1.2-12/13/14/15, if transform precoder is disabled, *dmrs-Type*=1*,* and *maxLength*=2*,* and the value of rank is determined according to the SRS resource indicator field if the higher layer parameter *txConfig = nonCodebook* and according to the Precoding information and number of layers field if the higher layer parameter *txConfig = codebook;*<br>    - 4 bits as defined by Tables 7.3.1.1.2-16/17/18/19, if transform precoder is disabled, *dmrs-Type*=2*,* and *maxLength*=1, and the value of rank is determined according to the SRS resource indicator field if the higher layer parameter *txConfig = nonCodebook* and according to the Precoding information and number of layers field if the higher layer parameter *txConfig = codebook;*<br>    - 5 bits as defined by Tables 7.3.1.1.2-20/21/22/23, if transform precoder is disabled, *dmrs-Type*=2*,* and *maxLength*=2*,* and the value of rank is determined according to the SRS resource indicator field if the higher layer parameter *txConfig = nonCodebook* and according to the Precoding information and number of layers field if the higher layer parameter *txConfig = codebook.*<br>    where the number of CDM groups without data of values 1, 2, and 3 in Tables 7.3.1.1.2-6 to 7.3.1.1.2-23 refers to CDM groups {0}, {0,1}, and {0, 1,2} respectively.<br>    If a UE is configured with both *dmrs-UplinkForPUSCH-MappingTypeA* and *dmrs-UplinkForPUSCH-MappingTypeB,* the bitwidth of this field equals max$\{x_A,x_B\}$, where $x_A$ is the "Antenna ports" bitwidth derived according to *dmrs-UplinkForPUSCH-MappingTypeA* and $x_B$ is the "Antenna ports" bitwidth derived according to *dmrs-UplinkForPUSCH-MappingTypeB.* A number of $\|x_A -x_B\|$ zeros are padded in the MSB of this field, if the mapping type of the PUSCH corresponds to the smaller value of $x_A$ and $x_B$.<br>- SRS request (SRS request) - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].<br>- CSI request (CSI (channel state information) request) - 0, 1, 2, 3, 4, 5, or 6 bits determined by higher layer parameter *reportTriggerSize.*<br>- CBG transmission information (CBGTI) (CBG (code block group) transmission information) - 0 bit if higher layer parameter *codeBlockGroupTransmission* for PDSCH is not configured, otherwise, 2, 4, 6, or 8 bits determined by higher layer parameter *maxCodeBlockGroupsPerTransportBlock* for PUSCH.<br>- PTRS-DMRS association (PTRS(Phase Tracking Reference Signal)-DMRS (Demodulation Reference Signal) association) - number of bits determined as follows<br>    - 0 bit if *PTRS-UplinkConfig* is not configured and transform precoder is disabled, or if transform precoder is enabled, or if *maxRank=1;*<br>    - 2 bits otherwise, where Table 7.3.1.1.2-25 and 7.3.1.1.2-26 are used to indicate the association between PTRS port(s) and DMRS port(s) for transmission of one PT-RS port and two PT-RS ports respectively, and the DMRS ports are indicated by the Antenna ports field.<br>    If "Bandwidth part indicator" field indicates a bandwidth part other than the active bandwidth part and the "PTRS-DMRS association" field is present for the indicated bandwidth part but not present for the active bandwidth part, the UE assumes the "PTRS-DMRS association" field is not present for the indicated bandwidth part.<br>- beta_offset indicator (beta_offset indicator) - 0 if the higher layer parameter *betaOffsets = semiStatic;* otherwise 2 bits as defined by Table 9.3-3 in [5, TS 38.213]. |

(continued)

- DMRS sequence initialization (DMRS sequence initialization) - 0 bit if transform precoder is enabled; 1 bit if transform precoder is disabled.
- UL-SCH indicator (UL-SCH indicator) - 1 bit. A value of "1" indicates UL-SCH shall be transmitted on the PUSCH and a value of "0" indicates UL-SCH shall not be transmitted on the PUSCH. Except for DCI format 0_1 with CRC scrambled by SP-CSI-RNTI, a UE is not expected to receive a DCI format 0_1 with UL-SCH indicator of "0" and CSI request of all zero(s).

DCI format 1_0 may be used as fallback DCI that schedules the PDSCH. Here, the CRC may be scrambled by C-RNTI. DCI format 1_0 with the CRC scrambled by C-RNTI may include the following information, for example, as shown in Table 10.

[Table 10]

- Identifier for DCI formats (DCI format identifier) - 1 bits
    - The value of this bit field is always set to 1, indicating a DL DCI format
- Frequency domain resource assignment (Frequency domain resource assignment) -
$\left\lceil \log_2(N_{RB}^{DL,BWP}(N_{RB}^{DL,BWP}+1)/2) \right\rceil$ bits where $N_{RB}^{DL,BWP}$ is given by subclause 7.3.1.0

If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows:
- Random Access Preamble index (Random Access Preamble index) - 6 bits according to *ra-PreambleIndex* in Subclause 5.1.2 of [8, TS38.321]
- UL/SUL indicator (uplink (UL)/ supplementary UL (SUL) indicator) - 1 bit. If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved
- SS/PBCH index (SS/PBCH index)- 6 bits. If the value of the "Random Access Preamble index" is not all zeros, this field indicates the SS/PBCH that shall be used to determine the RACH occasion for the PRACH transmission; otherwise, this field is reserved.
- PRACH Mask index (PRACH Mask index)- 4 bits. If the value of the "Random Access Preamble index" is not all zeros, this field indicates the RACH occasion associated with the SS/PBCH indicated by "SS/PBCH index" for the PRACH transmission, according to Subclause 5.1.1 of [8, TS38.321]; otherwise, this field is reserved
- Reserved bits (Reserved bits) - 10 bits
Otherwise, all remaining fields are set as follows:
- Time domain resource assignment (Time domain resource assignment) - 4 bits as defined in Subclause 5.1.2.1 of [6, TS 38.214]
- VRB-to-PRB mapping (VRB-to-PRB mapping) - 1 bit according to Table 7.3.1.2.2-5
- Modulation and coding scheme (Modulation and coding scheme) - 5 bits as defined in Subclause 5.1.3 of [6, TS 38.214]
- New data indicator (New data indicator) - 1 bit
- Redundancy version (Redundancy version) - 2 bits as defined in Table 7.3.1.1.1-2
- HARQ process number (HARQ process number) - 4 bits
- Downlink assignment index (Downlink assignment index) - 2 bits as defined in Subclause 9.1.3 of [5, TS 38.213], as counter DAI
- TPC command for scheduled PUCCH (Transmit Power Control command for scheduled PUSCH) - 2 bits as defined in Subclause 7.2.1 of [5, TS 38.213]
- PUCCH resource indicator (PUCCH 자원 지시자) - 3 bits as defined in Subclause 9.2.3 of [5, TS 38.213]
- PDSCH-to-HARQ_feedback timing indicator (PDSCH-to-HARQ feedback timing indicator) - 3 bits as defined in Subclause 9.2.3 of [5, TS38.213]

DCI format 1_1 may be used as non-fallback DCI that schedules the PDSCH. Here, the CRC may be scrambled by C-RNTI. DCI format 1_1 with CRC scrambled by C-RNTI may include the following information, for example, as shown in Table 11.

[Table 11]

- Identifier for DCI formats (DCI format identifier) - 1 bits
  - The value of this bit field is always set to 1, indicating a DL DCI format
- Carrier indicator (Carrier indicator) - 0 or 3 bits as defined in Subclause 10.1 of [5, TS 38.213].
- Bandwidth part indicator (Bandwidth part indicator) - 0, 1 or 2 bits as determined by the number of DL BWPs $n_{BWP,RRC}$ configured by higher layers, excluding the initial DL bandwidth part. The bitwidth for this field is determined as $\lceil \log_2(n_{BWP}) \rceil$ bits, where

  - $n_{BWP} = n_{BWP,RRC}$ +1 if $n_{BWP,RRC} \leq 3$, in which case the bandwidth part indicator is equivalent to the ascending order of the higher layer parameter *BWP-1d;*
  - otherwise $n_{BWP} = n_{BWP,RRC}$, in which case the bandwidth part indicator is defined in Table 7.3.1.1.2-1;
  
  If a UE does not support active BWP change via DCI, the UE ignores this bit field.
- Frequency domain resource assignment (Frequency domain resource assignment) - number of bits determined by the following, where $N_{RB}^{DL,BWP}$ is the size of the active DL bandwidth part:

  - $N_{RDG}$ bits if only resource allocation type 0 is configured, where $N_{RBG}$ is defined in Subclause 5.1.2.2.1 of [6, TS38.214],
  - $\lceil \log_2(N_{RB}^{DL,BWP}(N_{RB}^{DL,BWP}+1)/2) \rceil$ bits if only resource allocation type 1 is configured, or
  - $\max\left( \lceil \log_2(N_{RB}^{DL,BWP}(N_{RB}^{DL,BWP}+1)/2) \rceil, N_{RBG} \right)+1$ bits if both resource allocation type 0 and 1 are configured.
  - If both resource allocation type 0 and 1 are configured, the MSB bit is used to indicate resource allocation type 0 or resource allocation type 1, where the bit value of 0 indicates resource allocation type 0 and the bit value of 1 indicates resource allocation type 1.
  - For resource allocation type 0, the $N_{RBG}$ LSBs provide the resource allocation as defined in Subclause 5.1.2.2.1 of [6, TS 38.214].
  - For resource allocation type 1, the $\lceil \log_2(N_{RB}^{DL,BWP}(N_{RB}^{DL,BWP}+1)/2) \rceil$ LSBs provide the resource allocation as defined in Subclause 5.1.2.2.2 of [6, TS 38.214]
  
  If "Bandwidth part indicator" field indicates a bandwidth part other than the active bandwidth part and if both resource allocation type 0 and 1 are configured for the indicated bandwidth part, the UE assumes resource allocation type 0 for the indicated bandwidth part if the bitwidth of the "Frequency domain resource assignment" field of the active bandwidth part is smaller than the bitwidth of the "Frequency domain resource assignment" field of the indicated bandwidth part.
- Time domain resource assignment (Time domain resource assignment) - 0, 1, 2, 3, or 4 bits as defined in Subclause 5.1.2.1 of [6, TS 38.214]. The bitwidth for this field is determined as $\lceil \log_2(I) \rceil$ bits, where *I* is the number of entries in the higher layer parameter *pdsch-TimeDomainAllocationList* if the higher layer parameter is configured; otherwise *I* is the number of entries in the default table.
- VRB-to-PRB mapping (VRB-to-PRB mapping) - 0 or 1 bit:
  - 0 bit if only resource allocation type 0 is configured or if interleaved VRB-to-PRB mapping is not configured by high layers;
  - 1 bit according to Table 7.3.1.2.2-5 otherwise, only applicable to resource allocation type 1, as defined in Subclause 7.3.1.6 of [4, TS 38.211].
- PRB bundling size indicator (PRB bundling size indicator) - 0 bit if the higher layer parameter *prb-BundlingType* is not configured or is set to 'static', or 1 bit if the higher layer parameter *prb-BundlingType* is set to 'dynamic' according to Subclause 5.1.2.3 of [6, TS 38.214].
- Rate matching indicator (Rate matching indicator) - 0, 1, or 2 bits according to higher layer parameters *rateMatchPatternGroup1* and *rateMatchPatternGroup2,* where the MSB is used to indicate *rateMatchPatternGroup1* and the LSB is used to indicate *rateMatchPatternGroup2* when there are two groups.
- ZP CSI-RS trigger (ZP CSI-RS trigger) - 0, 1, or 2 bits as defined in Subclause 5.1.4.2 of [6, TS 38.214]. The bitwidth for this field is determined as $\lceil \log_2(n_{ZP}+1) \rceil$ bits, where $n_{ZP}$ is the number of aperiodic ZP CSI-RS resource sets configured by higher layer.

For transport block 1 (transport block 1):

- Modulation and coding scheme (Modulation and coding scheme) - 5 bits as defined in Subclause 5.1.3.1 of [6, TS 38.214]
- New data indicator (New data indicator) - 1 bit
- Redundancy version (Redundancy version) - 2 bits as defined in Table 7.3.1.1.1-2

For transport block 2 (only present if *maxNrofCodeWordsScheduledByDCI* equals 2) (transport block 2):

- Modulation and coding scheme (Modulation and coding scheme) - 5 bits as defined in Subclause 5.1.3.1 of [6, TS 38.214]
- New data indicator (New data indicator) - 1 bit
- Redundancy version (Redundancy version) - 2 bits as defined in Table 7.3.1.1.1-2

If "Bandwidth part indicator" field indicates a bandwidth part other than the active bandwidth part and the value of *maxNrofCodeWordsScheduledByDCI* for the indicated bandwidth part equals 2 and the value of *maxNrofCode-WordsScheduledByDCI* for the active bandwidth part equals 1, the UE assumes zeros are padded when interpreting the "Modulation and coding scheme", "New data indicator", and "Redundancy version" fields of transport block 2 according to Subclause 12 of [5, TS38.213], and the UE ignores the "Modulation and coding scheme", "New data indicator", and "Redundancy version" fields of transport block 2 for the indicated bandwidth part.

- HARQ process number (HARQ process number) - 4 bits
- Downlink assignment index (Downlink assignment index) - number of bits as defined in the following

- 4 bits if more than one serving cell are configured in the DL and the higher layer parameter *pdsch-HARQ-ACK-Codebook=dynamic,* where the 2 MSB bits are the counter DAI and the 2 LSB bits are the total DAI;
- 2 bits if only one serving cell is configured in the DL and the higher layer parameter *pdsch-HARQ-ACK-Codebook=dynamic,* where the 2 bits are the counter DAI;
- 0 bits otherwise.

- TPC command for scheduled PUCCH (Transmit Power Control command for scheduled PUSCH)- 2 bits as defined in Subclause 7.2.1 of [5, TS 38.213]
- PUCCH resource indicator (PUCCH resource indicator) - 3 bits as defined in Subclause 9.2.3 of [5, TS 38.213]
- PDSCH-to-HARQ_feedback timing indicator (PDSCH-to-HARQ feedback timing indicator) - 0, 1, 2, or 3 bits as defined in Subclause 9.2.3 of [5, TS 38.213]. The bitwidth for this field is determined as $\lceil \log_2(I) \rceil$ bits, where *I* is the number of entries in the higher layer parameter *dl-DataToUL-ACK.*

- Antenna port(s) (Antenna port(s)) - 4, 5, or 6 bits as defined by Tables 7.3.1.2.2-1/2/3/4, where the number of CDM groups without data of values 1, 2, and 3 refers to CDM groups {0}, {0, 1}, and {0, 1,2} respectively. The antenna ports $\{p_0"..,p_{v-1}\}$ shall be determined according to the ordering of DMRS port(s) given by Tables 7.3.1.2.2-1/2/3/4.

If a UE is configured with both *dmrs-DownlinkForPDSCH-MappingTypeA* and *dmrs-DownlinkForPDSCH-MappingTypeB,* the bitwidth of this field equals max $\{x_A,x_B\}$, where $x_A$ is the "Antenna ports" bitwidth derived according to *dmrs-DownlinkForPDSCH-MappingTypeA* and $x_B$ is the "Antenna ports" bitwidth derived according to *dmrs-DownlinkForPDSCH-MappingTypeB.* A number of $|x_A\ x_B|$ zeros are padded in the MSB of this field, if the mapping type of the PDSCH corresponds to the smaller value of $x_A$ and $x_B$.

- Transmission configuration indication (Transmission configuration indication) - 0 bit if higher layer parameter *tci-PresentInDCI* is not enabled; otherwise 3 bits as defined in Subclause 5.1.5 of [6, TS38.214].

If "Bandwidth part indicator" field indicates a bandwidth part other than the active bandwidth part,

- if the higher layer parameter *tci-PresentInDCI* is not enabled for the CORESET used for the PDCCH carrying the DCI format 1_1,

(continued)

<table>
<tr><td></td><td>- the UE assumes <i>tci-Pre-sentInDCI</i> is not enabled for all CORESETs in the indicated bandwidth part;</td></tr>
<tr><td>- otherwise,</td><td>- the UE assumes <i>tci-Pre-sentInDCI</i> is enabled for all CORESETs in the indicated bandwidth part.</td></tr>
</table>

- SRS request (SRS request) - 2 bits as defined by Table 7.3.1.1.2-24 for UEs not configured with *supplementaryUplink* in *ServingCellConfig* in the cell; 3 bits for UEs configured with *supplementaryUplink* in *ServingCellConfig* in the cell where the first bit is the non-SUL/SUL indicator as defined in Table 7.3.1.1.1-1 and the second and third bits are defined by Table 7.3.1.1.2-24. This bit field may also indicate the associated CSI-RS according to Subclause 6.1.1.2 of [6, TS 38.214].
- CBG transmission information (CBGTI) (CBG transmission information) - 0 bit if higher layer parameter *codeBlockGroupTransmission* for PDSCH is not configured, otherwise, 2, 4, 6, or 8 bits as defined in Subclause 5.1.7 of [6, TS38.214], determined by the higher layer parameters *maxCodeBlockGroupsPerTransportBlock* and *maxNrofCodeWordsScheduledByDCI* for the PDSCH.
- CBG flushing out information (CBGFI) (CBG flushing out information) - 1 bit if higher layer parameter *codeBlockGroupFlushIndicator* is configured as "TRUE", 0 bit otherwise.
- DMRS sequence initialization (DMRS sequence initialization) - 1 bit.

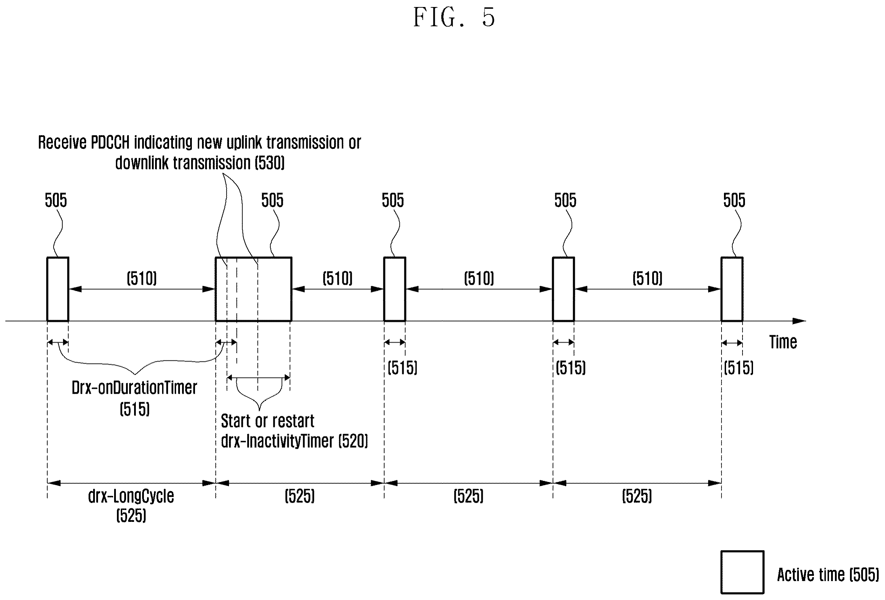

FIG. 5 illustrates an example of a discontinuous reception (DRX) operation according to an embodiment of the disclosure.

DRX is an operation in which a UE using a service discontinuously receives data in an RRC-connected state in which a radio link is established between a base station and the UE. When DRX is applied, the UE may turn on a receiver at a specific point in time and monitor a control channel, and when there is no data received for a predetermined period, turn off the receiver to reduce power consumption of the UE. The DRX operation may be controlled by a MAC layer device on the basis of various parameters and a timer.

With reference to FIG. 5, an active time 505 is a time during which the UE wakes up every DRX cycle and monitors a PDCCH. The active time 505 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, and ra-ContentionResolutionTimer are timers of which values are configured by the base station, and have functions of allowing the UE to monitor a PDCCH in a situation in which a predetermined condition is satisfied. drx-onDurationTimer 515 is a parameter for configuring a minimum time during which the UE is awake in a DRX cycle. drx-InactivityTimer 520 is a parameter for configuring a time during which the UE is additionally awake when a PDCCH indicating new uplink transmission or downlink transmission is received as indicated by reference numeral 530. drx-RetransmissionTimerDL is a parameter for configuring a maximum time during which the UE is awake in order to receive downlink retransmission in a downlink hybrid automatic repeat request (HARQ) procedure. drx-RetransmissionTimerUL is a parameter for configuring a maximum time during which the UE is awake in order to receive a grant of uplink retransmission in an uplink HARQ procedure. drx-onDurationTimer, drx-InactivityTimer, drx-RetransmissionTimerDL, and drx-RetransmissionTimerUL may be configured as, for example, a time, the number of subframes, and the number of slots. ra-ContentionResolutionTimer is a parameter for monitoring a PDCCH in a random access procedure.

An inActive time 510 is a time configured to not monitor the PDCCH or a time configured to not receive the PDCCH during the DRX operation, and the remaining time excluding the active time 505 from the entire time in which the DRX operation is performed may be the inactive time 510. If the PDCCH is not monitored during the active time 505, the UE may enter a sleep or an inActive state and reduce power consumption.

The DRX cycle refers to a cycle in which the UE wakes up and monitors the PDCCH. That is, the DRX cycle is a time interval or a cycle of an on-duration from monitoring of the PDCCH to monitoring of a next PDCCH by the UE. The DRX cycle has two types, a short DRX cycle and a long DRX cycle. The short DRX cycle may be optionally applied.

A long DRX cycle 525 is a longer cycle between two DRX cycles configured to the UE. The UE starts the drx-onDurationTimer 515 again at a point in time at which the long DRX cycle 525 passes after a start point (e.g., a start symbol) of the drx-onDurationTimer 515 while operating in long DRX. In the case of operating in the long DRX cycle 525, the UE may start the drx-onDurationTimer 515 in a slot after drx-SlotOffset in a subframe that satisfies Equation 1 below. Here, drx-SlotOffset implies a delay before the drx-onDurationTimer 515 starts. drx-SlotOffset may be configured as, for example, a time and the number of slots.

[Equation 2]

$$[(\text{SFN} \times 10) + \text{subframe number}]\ \text{modulo}\ (\text{drx-LongCycle}) = \text{drx-StartOffset}$$

Here, drx-LongCycleStartOffset and the Long DRX cycle 525 and drx-StartOffset may be used to define a subframe for starting the long DRX cycle 525. drx-LongCycleStartOffset may be configured as, for example, time, the number of subframes, and the number of slots.

Hereinafter, embodiments of the disclosure are described in detail with reference to the accompanying drawings. Hereinafter, a base station refers to an entity that performs resource assignment of a UE and may be at least one of a gNode B, a gNB, an eNode B, an eNB, a Node B, a base station (BS), a wireless access unit, a base station controller, and a node on a network. A UE may include a user equipment (UE), a mobile station (MS), a cellular phone, a smartphone, a computer, and a multimedia system that may perform a communication function. Hereinafter, embodiments of the disclosure will be described using the 5G system as an example, but the embodiments of the disclosure may be applied to other communication systems having similar technical background or channel types. For example, LTE or LTE-A mobile communication and mobile communication technologies developed after 5G may be included. Therefore, the embodiments of the disclosure may also be applied to other communication systems through some modifications without significantly departing from the scope of the disclosure, based on determination by one of ordinary skill in the art. The contents of the disclosure may be applied to frequency division duplex (FDD), time division duplex (TDD), and cross division duplex (XDD) systems.

Also, when detailed description of a related known function or constitution is determined to unnecessarily obscure the gist of the disclosure in describing the disclosure, the detailed description will be omitted. Terms that are described below are terms defined in consideration of the functions in the disclosure, and may be different according to the intent of a user, an operator, or custom. Therefore, the definitions of the terms should be made based on the overall content throughout the specification.

In the following description of the disclosure, higher layer signaling may be signaling corresponding to at least one or one or more combinations of the following signaling.

- MIB (Master Information Block)
- SIB (System Information Block) or SIB X (X=1, 2, ...)
- RRC (Radio Resource Control)
- MAC (Medium Access Control) CE (Control Element)

Also, L1 signaling may be signaling corresponding to at least one or one or more combinations of signaling methods using the following physical layer channel or signaling.

- PDCCH (Physical Downlink Control Channel)
- DCI (Downlink Control Information)
- UE-specific DCI
- Group common DCI
- Common DCI
- Scheduling DCI (e.g., DCI used to schedule downlink or uplink data)
- Non-scheduling DCI (e.g., DCI not intended to schedule downlink or uplink data)
- PUCCH (Physical Uplink Control Channel)
- UCI (Uplink Control Information)

Herein, that a specific signal includes a specific sequence, that the specific signal is the specific sequence, or that the specific signal corresponds to the specific sequence may be interpreted that the specific signal is generated based on the specific sequence.

Hereinafter, although the examples are described through a plurality of embodiments, they are not independent and one or more embodiments may be applied simultaneously or in combination.

As described above, in the 5G system, signal transmission and reception with ultra-wide bandwidth of tens to hundreds of MHz or several Gbps may be supported to achieve ultra-high-speed data services. Signal transmission and reception of ultra-wide bandwidth may be supported through a single component carrier (CC) or may be supported through carrier aggregation (CA) technology that combines a plurality of component carriers. Carrier aggregation technology may increase the total frequency bandwidth by combining component carriers with the relatively small bandwidth when a mobile communication carrier does not secure a frequency sufficient to provide ultra-high-speed data serves with a single component carrier, and accordingly enable ultra-high-speed data services.

The 5G system is designed and developed to address the wide range of use cases. In addition to waiting time, reliability, and availability, the energy efficiency of the UE is also crucial in the 5G system. The 5G UE needs to be charged weekly or daily depending on the individual's usage time. In general, tens of mW in an RRC_IDLE/RRC_INACTIVE state and hundreds of mW in an RRC_CONNECTED state may be consumed. Design for extending a battery lifespan is an essential element to improve not only user experience but also energy efficiency. The energy efficiency is even more important for a UE that does not have a continuous energy source, for example, a UE that uses a small rechargeable and/or single coin cell battery. Among 5G use cases, sensors and actuators may be widely deployed for monitoring, measurement, and charging. Typically, batteries of a sensor and an actuator are non-rechargeable and expected to last at least several years. Also, wearables may include a smart watch, a ring, an eHealth-related device, a medical monitoring device, and the like. However, their batteries typically struggle to last more than 1 to 2 weeks depending on use time.

Power consumption of the 5G UE depends on the set length of wake-up cycles, for example, paging cycles, and it is expected that an extended discontinuous reception (eDRX) cycle will be used to meet battery lifespan requirements. However, an eDRX method maintains long battery life based on high latency, so is not suitable for low-latency services. For example, in a fire detection and extinguishing use case, a fire shutter needs to be closed and a sprinkler needs to be turned on by an actuator within 1 to 2 seconds from a point in time at which the fire is detected by a sensor. That is, for use cases in which latency is critical, the eDRX method is not suitable since a traditionally long eDRX cycle may not meet the latency requirements.

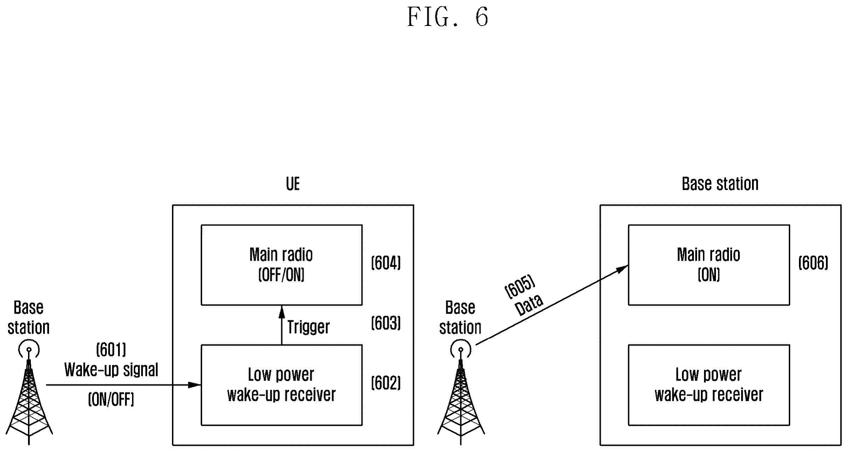

According to an embodiment, the 5G UE may need to periodically wake up once per eDRX cycle, which may impact the power consumption during a period in which signaling or data traffic is absent. If the UE may wake up only when the UE is triggered such as by paging, the power consumption may be dramatically reduced. This may be achieved by triggering a main radio (NR radio) using a wake-up signal (WUS) as shown in FIG. 6 below and by turning on the main radio using a separate receiver, a wake-up receiver (WUR) capable of monitoring the WUS at ultra-low power, only when data transmission and reception are required (and/or when transmission and reception of signals other than the WUS are required). Herein, the main radio may be a transceiver used to transmit and receive signals other than the WUS, for example, configuration information/control information/data.

FIG. 6 illustrates an example in which a base station instructs a UE having a WUR to transition to a main radio state through a WUS according to an embodiment of the disclosure.

With reference to FIG. 6, for example, if the base station transmits a WUS 601 corresponding to ON or OFF to the UE, the UE receives the WUS using a WUR 602. The UE triggers (603) a main radio 604 in an OFF or ON state to wake up or to power off based on ON or OFF information included in the received signal. Depending on cases, the UE may configure the main radio 604 to be in a deep sleep state without completely turning it OFF. If data traffic 605 to be transmitted from the base station to the UE occurs and a signal corresponding to WUS ON (i.e., WUS includes ON information), the main radio of the UE is turned ON (606) and the UE receives data transmitted from the base station not through the WUR but through the main radio. The power consumption to monitor the WUS depends on WUS design and a hardware module of the WUR used for signal detection and processing. Therefore, according to an embodiment, the gain may be maximized, particularly, for power-sensitive and small form factor devices including Internet of things (IoT) use cases (e.g., industrial sensors, controllers, etc.) and wearables.

RRC_IDLE/INACTIVE UEs and RRC_CONNECTED UEs each having a WUR may perform different operations. That is, the UEs each having the WUR may perform different operations based on an RRC state. The following embodiments describe the operation of the RRC_CONNECTED UEs. However, at least some of the following embodiments may also be applied to the RRC_IDLE/INACTIVE state UE.

&lt;First embodiment&gt;

First embodiment relates to a UE procedure in which an RRC_CONNECTED UE in a power-saving state having a WUR receives a WUS and wakes up a main radio regardless of DRX configuration.

The existing UE may monitor a PDCCH or may transmit and receive data in a specific section for each cycle by introducing technology called connected mode DRX (C-DRX) to save the power of the UE. Therefore, the UE may be adjusted to stay in a sleep state for as long as possible by configuring a long DRX cycle and a short DRX cycle according to a traffic situation of the RRC_CONNECTED UE. However, in the case of the long DRX cycle, a lot of delay time may occur from traffic generation to reception. In the case of the short DRX cycle, the UE needs to wake up and to perform PDCCH monitoring regardless of whether traffic is present, which causes high power consumption. In addition, the DRX cycle semi-statically changes at a medium access control-control element (MAC-CE) level, so may not flexibly respond to various traffic situations.

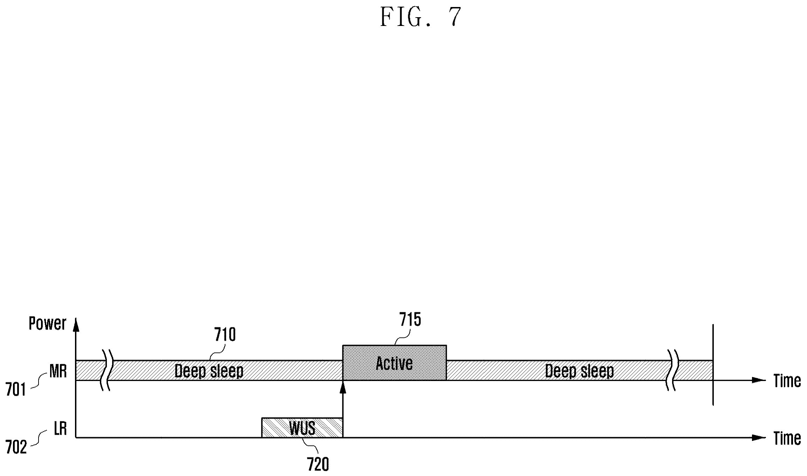

FIG. 7 illustrates an example of an operation in which an RRC_CONNECTED UE having a WUR dynamically activates DRX when a WUS is received regardless of the concept of a DRX cycle according to an embodiment of the disclosure.

According to an embodiment, triggering of DRX may be instructed through a WUS. That is, the DRX may be aperiodically triggered through the WUS. For example, the WUS may indicate on/off of DRX using 1 bit. For example, if a value of 1 bit is 0, it may correspond to off, and if the value of 1 bit is 1, it may correspond to on, and vice versa. As another example, the WUS may include information on a start point (e.g., start time) of DRX and/or a time period (on-duration time) in which the DRX needs to be on. This is further described below.

With reference to FIG. 7, the UE having the WUR may operate a main radio/main receiver (MR) 701 and a low power wake-up receiver/ low power wake-up radio (LR) 702 within the UE. The UE having the WUR may include the MR 701 and the LR 702. Herein, an operation of the MR may be understood as an operation of the UE using the MR and/or an operation of the UE through the MR and/or a control operation of the UE for the MR, and an operation of the LR may be understood as an operation of the UE using the LR and/or an operation of the UE through the LR and/or a control operation of the UE for the LR.

The MR 701 between the MR 701 and the LR 702 consumes a lot of power although C-DRX is applied. Therefore, to reduce the power consumption of the UE, the MR 701 may be maintained in a state of deep sleep 710 or ultra deep sleep when there is no change in traffic or system information.

Both the deep sleep state and the ultra deep sleep state are states in which the power of the UE is minimized, and the ultra deep sleep state may be said to be a higher power saving state in which even a memory of the UE is turned off. Unlike an RRC_IDLE/INACTIVE UE, the RRC_CONNECTED UE requires a lot of transition time and power/energy to transition from the ultra deep sleep state to an active state. Therefore, it may be more efficient for the UE to remain in the deep sleep state although more power is consumed than in the ultra deep sleep. Therefore, the MR 701 may be maintained in the state of deep sleep 710, while a WUS 720 may come through the LR 702. The WUS 720 may be simply an ID of the UE, and may also be a cell ID or a group ID to which the UE belongs. Alternatively, an on-duration time and a start time for a DRX cycle to be active may be specified and transmitted. That is, the WUS 720 may include the ID of the UE and/or may include the cell ID and/or group ID in which the UE is included and/or information on the DRX cycle to be active (e.g., onDurationTimer for on duration of DRX cycle, start time, etc.).

The LR 702 that receives the WUS 720 triggers the MR 701 to wake up immediately or after a specific application time. The MR 701 may become active (715) after a specific transition time and may start on duration for the DRX cycle. The UE in the active (715) state may perform PDCCH monitoring or data transmission and reception according to a DRX operation in an on-duration time within a C-DRX cycle of the UE. After completing all transmission and reception, the UE may transition again to the state of deep sleep 710 and enter a power saving state. That is, after the UE completes transmission and reception, the MR 701 transitions to the state of deep sleep 710.

<Second embodiment>

The second embodiment relates to a UE procedure in which an RRC_CONNECTED UE in a power-saving state having a WUR receives a WUS and is informed whether it needs to wake up in configured DRX. At least a portion of the second embodiment may be combined with at least a portion of the first embodiment.

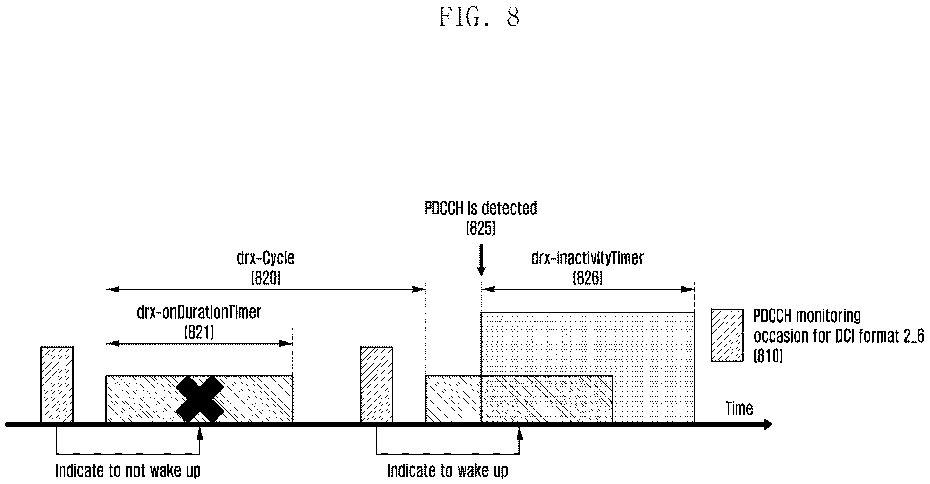

FIG. 8 illustrates description related to downlink control information (DCI) format 2_6 indicating whether an existing UE needs to wake up for PDCCH monitoring in a next DRX cycle. DCI format 2_6 may be DCP (DCI with cyclic redundancy check (CRC) scrambled with a power saving radio network temporary identifier (PS-RNTI)), and may be understood as an example of the WUS. Herein, DCI format 2_6 may be used as the WUS and/or a signal different from DCI format 2_6 may be used as the WUS. The name "WUS" is an example only and a signal of another name may be used.

With reference to FIG. 8, in the case of an existing UE, long drx-Cycle 820 is configured every cycle. At start of each cycle, drx-onDurationTimer 821 is configured. If a PDCCH for the corresponding UE is found within a section of drx-onDurationTimer 821 (825), drx-inactivityTimer 826 starts and prepares for a next PDCCH to come. However, although there is no traffic, the UE needs to wake up and monitor the PDCCH every long drx-Cycle 820, so large power consumption is expected.

To reduce this power consumption, the UE may receive DCI format 2_6 810 before a DRX cycle starts, and may identify whether to start drx-onDurationTimer 821. DCI format 2_6 810 is a 1-bit indicator, and instructs to not start drx-onDurationTimer 821 for 0 and instructs to start drx-onDurationTimer 821 for 1. Through this, the UE may remain in a power saving state for a longer period of time, but it is inefficient since the UE needs to perform synchronization by receiving a UE SSB burst and to perform automatic gain control (AGC) setting every DRX cycle in order to receive DCI format 2_6.

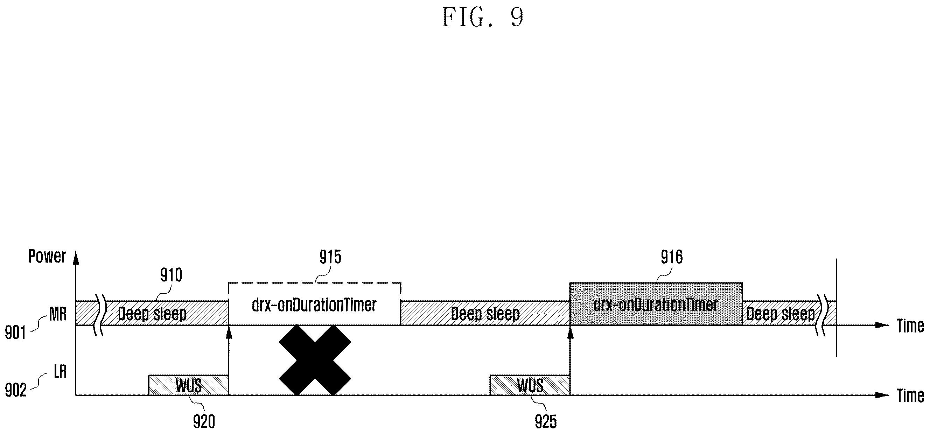

FIG. 9 illustrates an example of an operation for a UE procedure in which an RRC_CONNECTED UE having a WUR receives a WUS and is informed whether the UE needs to wake up in configured DRX according to an embodiment of the disclosure.

With reference to FIG. 9, a UE having a WUR may configure drx-onDurationTimer 915 or 916 every DRX cycle in an MR 901. However, since there may be no change in traffic or system information, the UE may receive, from a base station, a WUS 920 indicating that there is no need to start drx-onDurationTimer 915 with an LR 902. Therefore, the WUS 920 may need to be received earlier than drx-onDurationTimer 915. This may be determined based on UE capability that considers a state transition time of the UE. That is, a point in time at which the WUS 920 needs to be received may be determined based on the UE capability, and the corresponding point in time may be determined as a certain time period based on a start point in time of drx-onDurationTimer 915 or a start point in time of a DRX cycle. The WUS 920 may need to be received at least before or up to the corresponding point in time. For example, the UE may need to receive the WUS 920 before X slots to determine whether to skip drx-onDurationTimer 915. Similar to DCI format 2_6, the WUS 920 may include 1-bit information indicating 0 and/or may be based on a sequence that plays a similar role as 1-bit information indicating 0. The UE that receives the WUS 920 does not start drx-onDurationTimer 915, and remains in the state of deep sleep 910.

Similarly, immediately before a next DRX cycle, the UE may receive a WUS 925 before X slots. In this case, the WUS 925 may include 1-bit information indicating 1 and/or may be based on a sequence that plays a similar role as 1-bit information indicating 1. The UE may start drx-onDurationTimer 916 and may monitor a PDCCH in this section. In the example of FIG. 9, there may be a case in which the WUS 920 is not received and only the WUS 925 is received. In this case, the UE/base station may operate similarly as in the first embodiment. In the corresponding embodiment, since a WUS replaces DCI format 2_6, there is a need to consider the operation of the UE when the WUS is not received. For example, when the UE does not receive the WUS, the UE may determine that the WUS is transmitted but not received, and may receive DCI format 2_6. And/or when the UE does not receive the WUS, the UE may recognize that the base station did not instruct the UE to wake up and may not wake up in next C-DRX.

<Third embodiment>

The third embodiment relates to a UE procedure in which an RRC_CONNECTED UE having a WUR receives a WUS and performs PDCCH skipping.

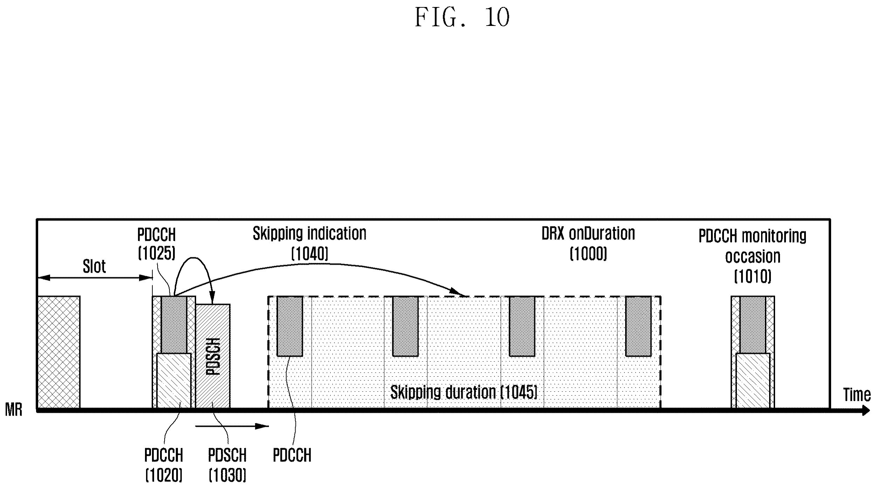

FIG. 10 illustrates a PDCCH skipping operation of an existing UE.

If the first and second embodiments relate to methods of reducing power consumption of a UE at a DRX cycle level of the UE, PDCCH skipping relates to a method of reducing the power consumption within a DRX onDuration cycle 1000. The existing UE receives a PDCCH monitoring occasion 1010 at specific cycles. In the PDCCH monitoring occasion 1010, various search space types of PDCCH 1020 or 1025 having different cycles may be monitored. Table 12 shows summary of various types for the PDCCH search space type. Table 12 shows examples of the PDCCH search space type, and the disclosure is not limited thereto.

[Table 12]

| Type | Search Space | RNTI | Use Case |
|---|---|---|---|
| Type0-PDCCH | Common | SI-RNTI for RMSI on a primary cell | SIB Decoding (SIB1) |
| Type0A-PDCCH | Common | SI-RNTI on a primary cell | SIB Decoding (Other SIBs) |
| Type0B-PDCCH | Common | MCCH-RNTI or G-RNTI on a primary cell | multicast |
| Type1-PDCCH | Common | RA-RNTI,TC-RNTI,C-RNTI on a primary cell | Msg2, Msg4 decoding in RACH |
| Type1A-PDCCH | Common | C-RNTI or CS-RNTI on a primary cell | PUSCH transmission in RRC_INACTIVE |
| Type2-PDCCH | Common | P-RNTI on a primary cell | Paging Decoding |
| Type2A-PDCCH | Common | PEI-RNTI on a primary cell | PEI Decoding |
| Type3-PDCCH | Common | INT-RNTI, SFI-RNTI, TPC-PUSCH-RNTI, TPC-PUCCH-RNTI, TPC-SRS-RNTI, C-RNTI, CS-RNTI(s), SP-CSI-RNTI | |
| UE-SS | UE Specific | C-RNTI, or CS-RNTI(s), or SP-CSI-RNTI """" | User specific PDSCH decoding |

To reduce the PDCCH monitoring count during a DRX active time within an active BWP, {0, 1, 2} bits of PDCCH monitoring adaptation indication may be transmitted in DCI format 0_1/0_2/1_1/1_2. PDCCH skipping that skips PDCCH monitoring during a specific section and search space set group (SSSG) switching that adjusts the PDCCH monitoring count may be present as methods of reducing the PDCCH monitoring count. Both technologies (PDCCH skipping and SSSG switching) may be indicated only in one indication and/or only one specific technology may be indicated. In the case of SSSG switching and PDCCH skipping, candidate skipping durations are indicated through PDCCH-Conifg within RRC as shown in Table 13.

[Table 13]

```
PDCCH-Config : := SEQUENCE {
        searchSpaceSwitchTimer-r17 INTEGER (1.. 800)
        pdcch-SkippingDurationList-r17 SEQUENCE(SIZE (1..3))
        OF SCS-SpecificDuration-r17
        ... }
```

In both technologies, three values may be initially selected/identified from among 1 to 800 values through RRC, and a specific value may be specified through PDCCH monitoring adaptation indication of DCI 1_X and 2_X.

In a situation in which only one of PDCCHSkippingDurationList and searchSpaceGroupIdList-r17 is defined in RRC, {1, 2} bits of PDCCH monitoring adaptation indication may be received. For 1 bit, a first value may be selected from among three values configured in the RRC, and for 2 bits, one value may be selected from among three values.

On the contrary, when both PDCCHSkippingDurationList and searchSpaceGroupIdList-r17 are configured in the RRC, 2 bits of PDCCH monitoring adaptation indication may be received, and each bit may be dedicated/corresponded and first values configured in the RRC may be applied.

Therefore, with reference to FIG. 10, when it is assumed that it is DCI format 1_X or 2_X and only PDCCHSkippingDurationList is configured in the PDCCH 1025, skipping duration 1045 may be indicated through skipping indication 1040 in the PDCCH 1025. Here, PDCCH skipping may be applied after 1 slot after receiving the PDCCH 925. Here, only Type3-PDCCH and USS in Table 12 may be skipped. A PDSCH 1030 or Type0/0A/0B/1/1A/2/2A-PDCCH (e.g., 1020) may not be skipped. The reason may be because Type0/0A/0B/1/1A/2/2A-PDCCH is system information or critical information such as Msg2, 4, or paging, so the UE needs to monitor the corresponding PDCCH during a skipping duration. Due to this behavior, the skipping operation of reducing the power consumption of the UE is bound to be limited.

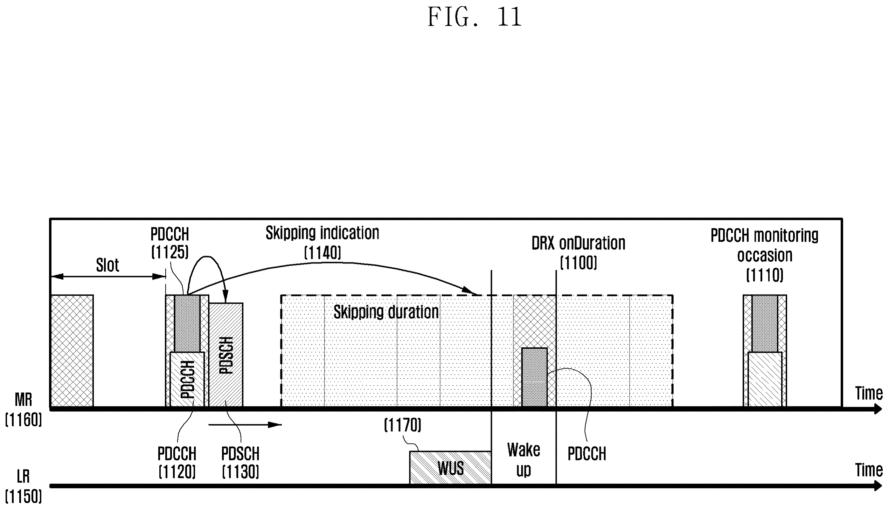

FIG. 11 illustrates an example of a PDCCH skipping operation of an RRC_CONNECTED UE having a WUR according to an embodiment of the disclosure. FIG. 11 exemplifies the operation within a DRX onDuration cycle 1100, but the disclosure is not limited thereto.

With reference to FIG. 11, an RRC_CONNECTED UE having a WUR may skip not only Type3-PDCCH and USS but also Type0/0A/0B/1/1A/2/2A-PDCCH to minimize power consumption in a PDCCH skipping duration, which differs from the existing UE.

In an MR 1160, if PDCCH monitoring adaptation indication 1140 is indicated in a PDCCH 1125 that transmits Type 1_X and 2_X, all types of PDCCH are skipped during a PDCCH skipping duration after one slot. And/or, scheduled configured grant, semi persistent scheduling, and the like may also be skipped during the corresponding duration to save more power consumption.

If Type0-PDCCH needs to be monitored by the corresponding UE to change system information (important) to the UE while the all types of PDCCH are skipped, that is, while not only Type3-PDCCH and USS but also Type0/0A/0B/1/1A/2/2A-PDCCH are skipped, the base station may transmit a WUS 1170 having information indicating monitoring of the corresponding type of PDCCH (Type0-PDCCH) to an LR 1150. Type0-PDCCH is an example, and the disclosure may be applied to not only Type3-PDCCH and USS but also Type0/0A/0B/1/1A/2/2A-PDCCH. That is, the corresponding WUS may indicate at least some of types of PDCCHs being skipped, which differ from Type0-PDCCH.

The LR 1150 receiving the WUS may be triggered to wake up the MR 1160 and may adjust such that the UE may monitor the corresponding PDCCH in the MR 1160 during a specific duration. After the required PDCCH monitoring is terminated, the UE may skip the PDCCH during a remaining skipping duration, or may monitor various types of PDCCHs as before PDCCH monitoring adaptation indication, with the assumption that PDCCH skipping has already expired.

To enable the operation as exemplified in FIG. 11, the UE having the WUR may have specification modification as in the example of Table 14 to skip all types of PDCCH during the PDCCH skipping duration.

[Table 14]

| Spec modification for MR |
| --- |

(continued)

| |
|---|
| A UE can be provided a set of durations by *PDCCHSkippingDurationList* for Type3-PDCCH CSS set or USS set for PDCCH monitoring on an active DL BWP of a serving cell. If the UE is not provided *PDCCHSkippingDurationList,* the following procedures related to skipping of PDCCH monitoring are not applicable.<br>→ If the *PDCCHTypeIndicationforWUS* is configured, the UE shall skips all types of PDCCH. |

That is, if RRC configuration called PDCCHTypeIndicationforWUS is configured to the UE, the UE may skip all PDCCHs. The disclosure is not limited to an information element (IE) with a specific name, and an IE with a different name other than the name used herein may be used. For example, PDCCHTypeIndicationforWUS is an example and the IE with the different name may also be used.

Additionally, the behavior of the UE may vary depending on what content/information is contained/included in a WUS that may indicate this (i.e., WUS that indicates specific type of PDCCH).

Initially, if the UE simply receives the WUS, the MR may wake up and view/monitor all types of PDCCH depending on the UE's capability or after a specific time. In this case, the content/information included in the WUS may be an ID of the UE or a cell ID or an ID of a group to which the belongs. Alternatively, it may be 1 bit of 0 or 1, or may be a sequence equivalent thereto. That is, in this case, the ID of the UE and/or the cell ID and/or the ID of the group to which the UE belongs and/or 1 bit (, which may correspond to WUS indication) may be transmitted and received and/or the WUS may be based on a sequence equivalent to 1 bit.

The UE that receives the corresponding WUS in the LR may be triggered to wake up the MR. The MR that wakes up after a specific time (e.g., from trigger point in time) monitors all of Type0/0A/0B/1/1A/2/2A/3 of PDCCH and USS. In another case, the WUS may notify a PDCCH search space type to be monitored by the UE. To this end, the WUS may include a plurality of bits and/or various sequences may be supported in indication. For example, the PDCCH search space type may be configured/indicated based on a plurality of bits included in the WUS. Each bit may correspond to a different PDCCH search space type. That is, the PDCCH search space type may be configured/indicated using a bitmap. As another example, the PDCCH search space type may be configured/indicated based on the sequence on which the WUS is based. In this case, each sequence among a plurality of sequences on which the WUS may be based may correspond to a different PDCCH search space type. The UE that receives the corresponding WUS (and/or MR of UE) wakes up and monitors a specified type of PDCCH depending on the UE's capability or after a fixed specific time.

Also, according to an embodiment, a time in which UE performs monitoring may also be defined. For example, when the UE monitors all types of PDCCH, a long period of time may be consumed and thus, a value for this may be defined based on the UE's capability. A maximum value of the UE's capability may be a time period from a reception point in time of the WUS to an end point in time of PDCCH skipping or a time period corresponding thereto. For example, PDCCH monitoring may be instructed to be performed using the maximum value of the UE's capability, and after the PDCCH is detected, it may be considered that the MR transitions back to deep sleep. And/or, a monitoring section may be configured based on the number of PDCCH search spaces to be monitored. For example, a relatively long period of time may be required to monitor all types of PDCCH, and a relatively short period of time may be required to monitor a specific type of PDCCH.

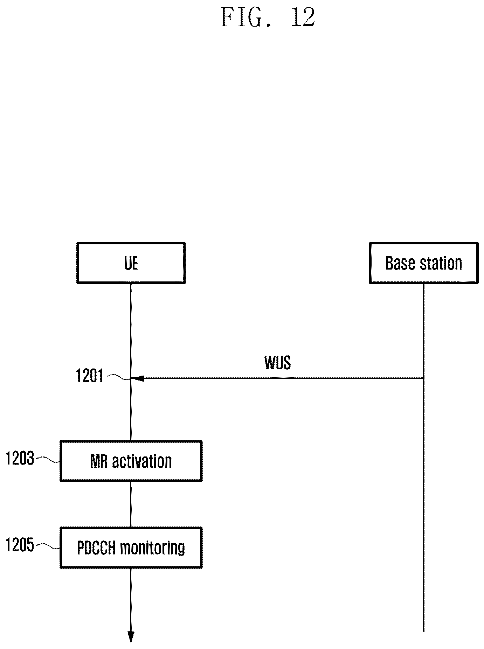

FIG. 12 illustrates an example of an operation of a UE and a base station according to an embodiment of the disclosure. Various modifications may be made to a method illustrated in a flowchart of FIG. 12. For example, although a series of operations are illustrated, various operations of each drawing may be performed overlappingly or in parallel, may be performed in different order, or may be performed multiple times. In another example, some operations may be omitted or replaced with other operations.

With reference to FIG. 12, in operation 1201 according to an embodiment, the UE may receive a WUS. The UE may receive the WUS using an LR. Information included in the WUS may be based on at least a portion of the content described in the first embodiment to the third embodiment. For example, the WUS may include an ID of the UE and/or a cell ID and/or a group ID to which the UE belongs and/or information on a DRX cycle to be active. The UE may receive configuration information related to the WUS, and may also perform a WUS reception operation.

In operation 1203 according to an embodiment, the UE may activate an MR based on the WUS (or may wake up MR). That is, whether to activate the MR may be determined based on the WUS. More detailed conditions on activation of the MR may be based on at least a portion of the content described in the first embodiment to the third embodiment.

In operation 1205 according to an embodiment, the UE may perform an operation related to PDCCH monitoring. For example, the UE may perform PDCCH monitoring through the activated MR, and may receive a PDCCH transmitted from the base station. PDCCH monitoring performance may be based on a DRX operation.

The base station may transmit configuration information related to the WUS and/or the WUS to the UE. For example, when the base station has data to transmit to the UE, the base station may transmit the WUS related to activating the MR of the UE. Then, the base station may transmit the PDCCH to the UE.

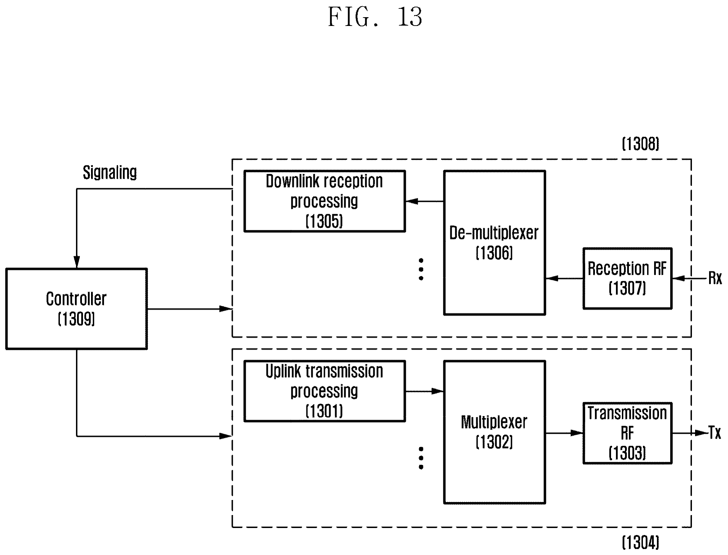

FIG. 13 illustrates an example of a UE transmission and reception device in a wireless communication system according to an embodiment of the disclosure. FIG. 13 illustrates an example of the UE transmission and reception device, and the UE transmission and reception device may further include another constitution block in addition to an illustrated constitution block.

With reference to FIG. 13, a UE may include a transmitter 1304 including an uplink transmission processing block 1301, a multiplexer 1302, and a transmission radio frequency (RF) block 1303, a receiver 1308 including a downlink reception processing block 1305, a de-multiplexer 1306, and a reception RF block 1307, and a controller 1309. As described above, the controller 1309 may control each of constitution blocks of the receiver 1308 for receiving a data channel or a control channel transmitted from base station or each of constitution blocks of the transmitter 1304 for transmitting an uplink signal.

In the transmitter 1304 of the UE, the uplink transmission processing block 1301 may generate a signal to be transmitted by performing a process, such as channel coding and modulation. The signal generated by the uplink transmission processing block 1301 may be multiplexed with another uplink signal by the multiplexer 1302, then signal processed in the transmission RF block 1303, and then may be transmitted to the base station.

The receiver 1308 of the UE distributes a signal received from the base station to each downlink reception processing block through demultiplexing. The downlink reception processing block 1305 may acquire control information or data transmitted from the base station by performing a process, such as demodulation and channel decoding, for a downlink signal of the base station. The UE receiver 1308may support the operation of the controller 1309 by applying output results of the downlink reception processing block to the controller 1309.

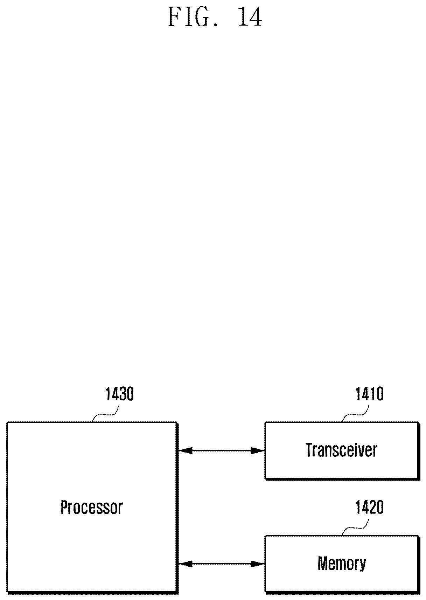

FIG. 14 is a block diagram illustrating an example of a constitution of a UE according to an embodiment of the disclosure.

As illustrated in FIG. 14, the UE may include a processor 1430, a transceiver 14140, and a memory 1420. However, the components of the UE are not limited to the above-described example. For example, the UE may include more components or may include fewer components than the above-described components. In addition, the processor 1430, the transceiver 1410, and the memory 1420 may be implemented in the form of a single chip. According to an embodiment, the transceiver 1410 may include the transmitter 1304 and the receiver 1308 of FIG. 13. The processor 1430 of FIG. 14 may include the controller 1309 of FIG. 13.

According to an embodiment, the processor 1430 may control a series of processes such that the UE may operate according to the embodiment of the disclosure described above. For example, the processor 1430 may control the components of the UE to perform a transmission and reception method of the UE depending on whether a base station mode is in a base station energy saving mode or a base station normal mode according to the embodiment of the disclosure. The processor 1430 may be in the singular form or in the plural form, and the processor 1430 may perform an operation of the UE according to the embodiment of the disclosure described above by executing a program stored in the memory 1420.

The transceiver 1410 may transmit and receive a signal to and from the base station. The signal transmitted and received to and from the base station may include control information and data. The transceiver 1410 may include an RF transmitter configured to up-convert and amplify a frequency of a transmitted signal and an RF receiver configured to low-noise amplify a received signal and down-convert a frequency. However, this is only an example of the transceiver 1410, and the components of the transceiver 1410 are not limited to the RF transmitter and the RF receiver. Also, the transceiver 1410 may receive a signal through a wireless channel and output the same to the processor 1430, and may transmit a signal output from the processor 1430 through the wireless channel.

According to an embodiment, the memory 1420 may store a program and data required for an operation of the UE. Also, the memory 1420 may store control information or data included in signals transmitted and received by the UE. The memory 1420 may be configured by storage media such as a read only memory (ROM), a random access memory (RAM), a hard disc, a compact disc (CD)-ROM, and a digital versatile disc (DVD), or combination of storage media. Also, the number of memories 1420 may be plural. According to an embodiment, the memory 1420 may store a program for performing a transmission and reception operation of the UE depending on whether the base station is in the base station energy saving mode or the base station normal mode according to embodiments of the disclosure described above.

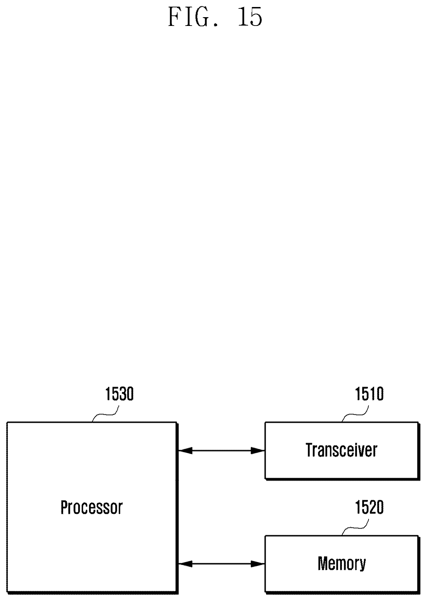

FIG. 15 is a block diagram illustrating an example of a constitution of a base station according to an embodiment of the disclosure.

As illustrated in FIG. 15, the base station of the disclosure may include a processor 1530, a transceiver 1510, and a memory 1520. However, the components of the base station are not limited to the above-described example. For example, the base station may include more components or may include fewer components than the above-described components. In addition, the processor 1530, the transceiver 1510, and the memory 1520 may be implemented in the form of a single chip.

The processor 1530 may control a series of processes such that the base station may operate according to the embodiment of the disclosure described above. The processor 1530 may control the components of the base station to perform the method according to an embodiment of the disclosure. The processor 1530 may be in the singular form or in the plural form, and the processor 1530 may perform a method according to the embodiment of the disclosure described above by executing a program stored in the memory 1520.

The transceiver 1510 may transmit and receive a signal to and from the UE. The signal transmitted and received to and from the UE may include control information and data. The transceiver 1510 may include an RF transmitter configured to up-convert and amplify a frequency of a transmitted signal and an RF receiver configured to low-noise amplify a received signal and down-convert a frequency. However, this is only an example of the transceiver 1510, and the components of the transceiver 1510 are not limited to the RF transmitter and the RF receiver. Also, the transceiver 1510 may receive a signal through a wireless channel and output the same to the processor 1530, and may transmit a signal output from the processor 1530 through the wireless channel.

According to an embodiment, the memory 1520 may store a program and data required for an operation of the base station. Also, the memory 1520 may store control information or data included in signals transmitted and received by the base station. The memory 1520 may be configured by storage media such as a ROM, a RAM, a hard disc, a CD-ROM, and a DVD, or combination of storage media. Also, the number of memories 1520 may be plural. According to an embodiment, the memory 1520 may store the program for performing the method according to the embodiments of the disclosure described above.

The methods according to the embodiments described in the claims or specification of the disclosure may be implemented in the form of hardware, software, or combination of hardware and software.

When implemented in software, a computer-readable storage medium storing one or more programs (software modules) may be provided. The one or more programs stored in the computer-readable storage medium may be configured for execution by one or more processors within an electronic device. The one or more programs may include instructions that cause the electronic device to execute the methods according to the embodiments described in the claims or specification of the disclosure.

Such a program (software module, software) may be stored in a random access memory, a nonvolatile memory including a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Alternatively, such a program may be stored in a memory configured with a combination of some or all of them. Also, a plurality of component memories may be included.

Also, such a program may be stored in an attachable storage device that may be accessed through a communication network, such as the Internet, an intranet, a local area network (LAN), a wide LAN (WLAN), or a storage area network (SAN), or through a communication network configured with a combination thereof. Such a storage device may access a device that carries out an embodiment of the disclosure through an external port. Also, a separate storage device on a communication network may access the device that carries out an embodiment of the disclosure.

In specific embodiments of the disclosure described above, the components included in the disclosure are expressed in the singular or plural form according to the presented specific embodiment. However, the singular or plural expression is appropriately selected for ease of description according to the presented situation, and the disclosure is not limited by a single component or a plurality of components. Those components described in the plural form may be configured as a single component, and those components described in the singular form may be configured to be in the plural form.

Meanwhile, although desirable embodiments of the disclosure are disclosed in this specification and drawings, they are provided in general sense to easily describe the technical content of the disclosure and to help understanding of the disclosure, and are not intended to limit the scope of the disclosure. That is, it will be apparent to one of ordinary skill in the art to which the disclosure pertains that other modification examples based on the technical spirit of the disclosure may be made in addition to the embodiments disclosed herein. Also, each of the embodiments may be combined and operated if necessary.

Meanwhile, although detailed embodiments are described in the detailed description of the disclosure, it is apparent that various modifications may be made without departing from the scope of the disclosure. Therefore, the scope of the disclosure should not be limited to the embodiments described herein, and should be defined by the scope of the claims and the equivalents thereof.

**Claims**

1. A method performed by a user equipment (UE) in a communication system, the method comprising:

   receiving, through higher layer signaling, a configuration for a plurality of time periods for physical downlink control channel (PDCCH) monitoring skipping and a configuration related to skipping for PDCCH monitoring through a main radio (MR) of the UE;
   receiving downlink control information (DCI) including information related to a time period among the plurality of time periods;

skipping PDCCH monitoring through the MR in the time period; and

in case that a wake-up signal (WUS) is received through a low power (LR) wake-up receiver of the UE within the time period, performing PDCCH monitoring through the MR in at least some time periods after the WUS is received in the time period.

2. The method of claim 1, wherein PDCCH monitoring through the MR is skipped for a plurality of PDCCH search space types, and the plurality of PDCCH search space types include a user equipment specific search space (USS) and a Type3-PDCCH common search space (CSS), and further includes at least one of a Type0-PDCCH CSS, a Type0A-PDCCH CSS, a Type0B-PDCCH CSS, a Type1A-PDCCH CSS, a Type2-PDCCH CSS, and a Type2A-PDCCH CSS.

3. The method of claim 2, wherein PDCCH monitoring through the MR is performed for the plurality of PDCCH search space types after the WUS is received, or performed for a specific PDCCH search space type indicated by the WUS among the plurality of PDCCH search space types after the WUS is received.

4. The method of claim 1, wherein, in case that a discontinuous reception (DRX) configuration is received through the higher layer signaling and the WUS is received through the LR, whether drx-onDurationTimer included in the DRX configuration is triggered is indicated by the WUS, and the WUS is different from DCI format 2_6 for the MR.

5. The method of claim 4, wherein, in case that the WUS is configured to be monitored through the LR, the DCI format 2_6 is not monitored through the MR or the DCI format 2_6 received through the MR is ignored.

6. The method of claim 1, further comprising:
   transmitting UE capability report related to that the UE includes the LR.

7. A user equipment (UE) of a communication system, the UE comprising:

   a transceiver; and
   a processor connected to the transceiver,
   wherein the processor is configured to:

   receive, through higher layer signaling, a configuration for a plurality of time periods for physical downlink control channel (PDCCH) monitoring skipping and a configuration related to skipping for PDCCH monitoring through a main radio (MR) of the UE;
   receive downlink control information (DCI) including information related to a time period among the plurality of time periods;
   skip PDCCH monitoring through the MR in the time period; and
   in case that a wake-up signal (WUS) is received through a low power (LR) wake-up receiver of the UE within the time period, perform PDCCH monitoring through the MR in at least some time periods after the WUS is received in the time period.

8. The UE of claim 7, wherein PDCCH monitoring through the MR is skipped for a plurality of PDCCH search space types, and the plurality of PDCCH search space types include a user equipment specific search space (USS) and a Type3-PDCCH common search space (CSS), and further includes at least one of a Type0-PDCCH CSS, a Type0A-PDCCH CSS, a Type0B-PDCCH CSS, a Type1A-PDCCH CSS, a Type2-PDCCH CSS, and a Type2A-PDCCH CSS.

9. The UE of claim 8, wherein PDCCH monitoring through the MR is performed for the plurality of PDCCH search space types after the WUS is received, or performed for a specific PDCCH search space type indicated by the WUS among the plurality of PDCCH search space types after the WUS is received.

10. The UE of claim 7, wherein, in case that a discontinuous reception (DRX) configuration is received through the higher layer signaling and the WUS is received through the LR, whether drx-onDurationTimer included in the DRX configuration is triggered is indicated by the WUS, and the WUS is different from DCI format 2_6 for the MR.

11. The UE of claim 10, wherein, in case that the WUS is configured to be monitored through the LR, the DCI format 2_6 is not monitored through the MR or the DCI format 2_6 received through the MR is ignored.

12. A method performed by a base station in a communication system, the method comprising:

transmitting, through higher layer signaling, a configuration for a plurality of time periods for physical downlink control channel (PDCCH) monitoring skipping and a configuration related to skipping for PDCCH monitoring through a main radio (MR) of a user equipment (UE) to the UE; and

transmitting downlink control information (DCI) including information related to a time period among the plurality of time periods to the UE,

wherein transmission of a PDCCH for the MR to the UE is skipped in the time period, and in case that a wake-up signal (WUS) for a low power (LR) wake-up receiver of the UE is transmitted to the UE within the time period, transmission of the PDCCH for the MR to the UE is performed in at least some time periods after the WUS of the time period is transmitted.

13. The method of claim 12, wherein, in case that a discontinuous reception (DRX) configuration is received through the higher layer signaling and the WUS for the LR is transmitted, whether drx-onDurationTimer included in the DRX configuration is triggered is indicated by the WUS, and the WUS is different from DCI format 2_6 for the MR.

14. A base station of a communication system, the base station comprising:

a transceiver; and
a processor connected to the transceiver,
wherein the processor is configured to:

transmit, through higher layer signaling, a configuration for a plurality of time periods for physical downlink control channel (PDCCH) monitoring skipping and a configuration related to skipping for PDCCH monitoring through a main radio (MR) of a user equipment (UE) to the UE; and

transmit downlink control information (DCI) including information related to a time period among the plurality of time periods to the UE, and

transmission of a PDCCH for the MR to the UE is skipped in the time period, and in case that a wake-up signal (WUS) for a low power (LR) wake-up receiver of the UE is transmitted to the UE within the time period, transmission of the PDCCH for the MR to the UE is performed in at least some time periods after the WUS of the time period is transmitted.

15. The base station of claim 14, wherein, in case that a discontinuous reception (DRX) configuration is received through the higher layer signaling and the WUS for the LR is transmitted, whether drx-onDurationTimer included in the DRX configuration is triggered is indicated by the WUS, and the WUS is different from DCI format 2_6 for the MR.

# FIG. 1

Frame [114]

subframe [105]

Slot [106]

Transmission bandwidth $N_{BW}$ subcarriers [104]

Resource element (k,l) [112]

$N^{RB}_{sc}$ subcarriers [110]

$N^{slot}_{symb}$ symbols [102]

Frequency

Time

# FIG. 2

# FIG. 3

# FIG. 4

401
UE

402
Base station

UE capability information request — 410

UE capability information — 420

FIG. 5

Receive PDCCH indicating new uplink transmission or downlink transmission [530]

Drx-onDurationTimer [515]

Start or restart drx-InactivityTimer [520]

drx-LongCycle [525]

Active time [505]

Time

[505]  [510]  [515]  [525]  [530]

FIG. 6

FIG. 7

EP 4 697 816 A1

# FIG. 8

PDCCH is detected
[825]

drx-Cycle
[820]

drx-inactivityTimer
[826]

drx-onDurationTimer
[821]

PDCCH monitoring
occasion for DCI format 2_6
[810]

Time

Indicate to not wake up

Indicate to wake up

EP 4 697 816 A1

FIG. 9

# FIG. 10

EP 4 697 816 A1

FIG. 11

EP 4 697 816 A1

FIG. 12

UE                          Base station

WUS

1201

1203  MR activation

1205  PDCCH monitoring

FIG. 13

FIG. 14

1430

1410

Processor

Transceiver

1420

Memory

FIG. 15

1530

1510

Processor

Transceiver

1520

Memory

## INTERNATIONAL SEARCH REPORT

| International application No. |
| --- |
| **PCT/KR2024/006370** |

**A. CLASSIFICATION OF SUBJECT MATTER**

**H04W 52/02**(2009.01)i; **H04W 76/28**(2018.01)i; **H04W 72/232**(2023.01)i

According to International Patent Classification (IPC) or to both national classification and IPC

**B. FIELDS SEARCHED**

Minimum documentation searched (classification system followed by classification symbols)

H04W 52/02(2009.01); H04L 12/26(2006.01); H04W 24/10(2009.01); H04W 72/04(2009.01); H04W 72/12(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH 모니터링(PDCCH monitoring), 스키핑(skipping), 시간 구간(time duration), DCI, WUS

**C. DOCUMENTS CONSIDERED TO BE RELEVANT**

| Category* | Citation of document, with indication, where appropriate, of the relevant passages | Relevant to claim No. |
| --- | --- | --- |
| X <br><br> A | VIVO. Discussion on XR specific power saving enhancements. R1-2203585, 3GPP TSG RAN WG1 Meeting #109-e, e-Meeting. 29 April 2022. <br> See pages 6-8. | 1,6-7,12,14 <br><br> 2-5,8-11,13,15 |
| A | US 2021-0058304 A1 (QUALCOMM INCORPORATED) 25 February 2021 (2021-02-25) <br> See paragraphs [0072]-[0095]; and figures 6-7. | 1-15 |
| A | EP 4156760 A1 (GUANGDONG OPPO MOBILE TELECOMMUNICATIONS CORP., LTD.) 29 March 2023 (2023-03-29) <br> See paragraphs [0042]-[0061]; and figure 1. | 1-15 |
| A | KR 10-2021-0147019 A (ZTE CORPORATION) 06 December 2021 (2021-12-06) <br> See paragraphs [0148]-[0163]; and figure 13. | 1-15 |
| A | KR 10-2022-0047978 A (QUALCOMM INCORPORATED) 19 April 2022 (2022-04-19) <br> See paragraphs [0093]-[0107]; and figures 12-13. | 1-15 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **20 August 2024** | **20 August 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="3">INTERNATIONAL SEARCH REPORT</td><td colspan="2">International application No.</td></tr>
<tr><td colspan="3">Information on patent family members</td><td colspan="2">**PCT/KR2024/006370**</td></tr>
</table>

| Patent document cited in search report | | | Publication date (day/month/year) | Patent family member(s) | | | Publication date (day/month/year) |
|---|---|---|---|---|---|---|---|
| US | 2021-0058304 | A1 | 25 February 2021 | CN | 114270764 | A | 01 April 2022 |
| | | | | EP | 4018757 | A1 | 29 June 2022 |
| | | | | US | 11405288 | B2 | 02 August 2022 |
| | | | | WO | 2021-035253 | A1 | 25 February 2021 |
| EP | 4156760 | A1 | 29 March 2023 | CN | 115462115 | A | 09 December 2022 |
| | | | | EP | 4156760 | A4 | 16 August 2023 |
| | | | | US | 2023-0119565 | A1 | 20 April 2023 |
| | | | | WO | 2021-253431 | A1 | 23 December 2021 |
| KR | 10-2021-0147019 | A | 06 December 2021 | CN | 113973511 | A | 25 January 2022 |
| | | | | CN | 113973511 | B | 06 December 2022 |
| | | | | CN | 115866727 | A | 28 March 2023 |
| | | | | EP | 3949527 | A1 | 09 February 2022 |
| | | | | EP | 3949527 | A4 | 16 November 2022 |
| | | | | US | 2022-0201516 | A1 | 23 June 2022 |
| | | | | WO | 2020-199121 | A1 | 08 October 2020 |
| KR | 10-2022-0047978 | A | 19 April 2022 | BR | 112022002361 | A2 | 26 April 2022 |
| | | | | CN | 114258710 | A | 29 March 2022 |
| | | | | EP | 4014588 | A1 | 22 June 2022 |
| | | | | JP | 2022-544201 | A | 17 October 2022 |
| | | | | TW | 202116093 | A | 16 April 2021 |
| | | | | US | 11533685 | B2 | 20 December 2022 |
| | | | | US | 2021-0051589 | A1 | 18 February 2021 |
| | | | | US | 2023-0075265 | A1 | 09 March 2023 |
| | | | | WO | 2021-034626 | A1 | 25 February 2021 |

Form PCT/ISA/210 (patent family annex) (July 2022)